(19) Europäisches Patentamt
European Patent Office
Office européen des brevets

(11) **EP 3 493 589 A1**

(12) **EUROPEAN PATENT APPLICATION**
published in accordance with Art. 153(4) EPC

(43) Date of publication:
**05.06.2019 Bulletin 2019/23**

(51) Int Cl.:
***H04W 28/16*** (2009.01)

(21) Application number: **16912437.7**

(22) Date of filing: **12.08.2016**

(86) International application number:
**PCT/CN2016/095031**

(87) International publication number:
**WO 2018/027982 (15.02.2018 Gazette 2018/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **WU, Zuomin
Shenzhen
Guangdong 518129 (CN)**
• **LI, Chaojun
Shenzhen
Guangdong 518129 (CN)**
• **MA, Sha
Shenzhen
Guangdong 518129 (CN)**

(74) Representative: **Gill Jennings & Every LLP
MXL
The Broadgate Tower
20 Primrose Street
London EC2A 2ES (GB)**

(54) **METHOD AND APPARATUS FOR SENDING REFERENCE SIGNAL, AND METHOD AND APPARATUS FOR RECEIVING REFERENCE SIGNAL**

(57) A method and an apparatus for sending a reference signal and a method and an apparatus for receiving a reference signal are disclosed. The method includes: determining, by a first sending device, an antenna port for a first reference signal, where the first reference signal is at least one of at least two types of reference signals; the at least two types of reference signals correspond to a same configuration pattern; and the configuration pattern is used to indicate a time-frequency resource corresponding to each of a plurality of antenna ports; and sending, by the first sending device, the first reference signal on the antenna port for the first reference signal, where the first reference signal is carried on a first time-frequency resource, and the first time-frequency resource is a time-frequency resource corresponding to the antenna port for the first reference signal and indicated by the configuration pattern. According to the method, design difficulty of a configuration pattern can be reduced, and processing load when a sending device and a receiving device send a reference signal can be reduced.

FIG. 5

## Description

## TECHNICAL FIELD

The present invention relates to the communications field, and more specifically, to a method and an apparatus for sending a reference signal, and a method and an apparatus for receiving a reference signal.

## BACKGROUND

With development of communications technologies, reference signals (Reference Signal, RS), which are also referred to as pilot signals (pilot signal), have been widely applied.

Reference signals may be classified into many different types from a perspective of functions, corresponding channels, or the like. At present, different types of reference signals use different configuration patterns (specifically, time-frequency resource configuration patterns). To be specific, to transmit different reference signals, a plurality of configuration patterns need to be configured and stored in a communications system. Consequently, design difficulty of a configuration pattern is increased, and processing load when a sending device and a receiving device send a reference signal is increased.

## SUMMARY

Embodiments of the present invention provide a method and an apparatus for sending a reference signal, and a method and an apparatus for receiving a reference signal, to reduce design difficulty of a configuration pattern, and reduce processing load when a sending device and a receiving device send a reference signal.

According to a first aspect, a method for sending a reference signal is provided. The method includes: determining, by a first sending device, an antenna port for a first reference signal, where the first reference signal is at least one of at least two types of reference signals; the at least two types of reference signals correspond to a same configuration pattern; and the configuration pattern is used to indicate a time-frequency resource corresponding to each of a plurality of antenna ports; and sending, by the first sending device, the first reference signal on the antenna port for the first reference signal, where the first reference signal is carried on a first time-frequency resource, and the first time-frequency resource is a time-frequency resource corresponding to the antenna port for the first reference signal and indicated by the configuration pattern.

With reference to the first aspect, in a first implementation of the first aspect, the antenna port for the first reference signal is determined in all antenna ports supported by the sending device.

Therefore, flexibility of selecting an antenna port can be improved.

With reference to the first aspect and the foregoing implementation of the first aspect, in a second implementation of the first aspect, at least one of the plurality of antenna ports is further used to send a second reference signal; the second reference signal is at least one of the at least two types of reference signals; a type of the first reference signal is different from a type of the second reference signal; the second reference signal is carried on a second time-frequency resource; and the second time-frequency resource is a time-frequency resource corresponding to the antenna port for the second reference signal and indicated by the configuration pattern.

With reference to the first aspect and the foregoing implementations of the first aspect, in a third implementation of the first aspect, the second time-frequency resource includes a part or all of the first time-frequency resource.

Therefore, two reference signals can be sent on a same time-frequency resource, thereby reducing overheads of time-frequency resources used to transmit reference signals.

With reference to the first aspect and the foregoing implementations of the first aspect, in a fourth implementation of the first aspect, the first reference signal is sent to one receiving device, and the second reference signal is sent to a receiving device group including a plurality of receiving devices.

With reference to the first aspect and the foregoing implementations of the first aspect, in a fifth implementation of the first aspect, that a type of the first reference signal is different from a type of the second reference signal includes: the first reference signal is used for data channel demodulation, and the second reference signal is used for control channel demodulation; or the first reference signal is used for channel measurement, and the second reference signal is used for control channel demodulation; or the first reference signal is used for data channel demodulation, and the second reference signal is used for channel measurement.

With reference to the first aspect and the foregoing implementations of the first aspect, in a sixth implementation of the first aspect, the second reference signal is not precoded.

With reference to the first aspect and the foregoing implementations of the first aspect, in a seventh implementation of the first aspect, the second reference signal is sent by a second sending device.

With reference to the first aspect and the foregoing implementations of the first aspect, in an eighth implementation of the first aspect, at least one of the plurality of antenna ports is further used to send a third reference signal; the third reference signal is at least one of the at least two types of reference signals; a type of the third reference signal is different from the type of the first reference signal, and the type of the third reference signal is different from the type of the second reference signal; the third reference signal is carried on a third time-frequency resource; and the third time-frequency resource is a time-frequency resource corresponding to the antenna port for the third reference signal and indicated by the configuration pattern.

With reference to the first aspect and the foregoing implementations of the first aspect, in a ninth implementation of the first aspect, the third time-frequency resource includes a part or all of the first time-frequency resource, and the third time-frequency resource includes a part or all of the second time-frequency resource.

With reference to the first aspect and the foregoing implementations of the first aspect, in a tenth implementation of the first aspect, that a type of the third reference signal is different from the type of the first reference signal, and the type of the third reference signal is different from the type of the second reference signal includes: the first reference signal is used for data channel demodulation, the second reference signal is used for control channel demodulation, and the third reference signal is used for channel measurement.

With reference to the first aspect and the foregoing implementations of the first aspect, in an eleventh implementation of the first aspect, the third reference signal is sent by a third sending device.

With reference to the first aspect and the foregoing implementations of the first aspect, in a twelfth implementation of the first aspect, functions of the at least two types of reference signals are different, and the function includes at least one of the following: automatic gain control AGC adjustment, time-frequency synchronization, phase compensation, physical data channel demodulation, physical control channel demodulation, channel state information measurement, radio resource management RRM measurement, or positioning measurement.

With reference to the first aspect and the foregoing implementations of the first aspect, in a thirteenth implementation of the first aspect, the at least two types of reference signals include at least two of a cell-common reference signal CRS, a channel state information-reference signal CSI-RS, or a demodulation reference signal DMRS.

According to a second aspect, a method for receiving a reference signal is provided. The method includes: determining, by a first receiving device, an antenna port for a first reference signal, where the first reference signal is at least one of at least two types of reference signals; the at least two types of reference signals correspond to a same configuration pattern; and the configuration pattern is used to indicate a time-frequency resource corresponding to each of a plurality of antenna ports; and receiving, by the first receiving device, the first reference signal on the antenna port for the first reference signal, where the first reference signal is carried on a first time-frequency resource, and the first time-frequency resource is a time-frequency resource corresponding to the antenna port for the first reference signal and indicated by the configuration pattern.

With reference to the second aspect, in a first implementation of the second aspect, the antenna port for the first reference signal is determined in all antenna ports supported by the sending device.

With reference to the second aspect and the foregoing implementation of the second aspect, in a second implementation of the second aspect, at least one of the plurality of antenna ports is further used to send a second reference signal; the second reference signal is at least one of the at least two types of reference signals; a type of the first reference signal is different from a type of the second reference signal; the second reference signal is carried on a second time-frequency resource; and the second time-frequency resource is a time-frequency resource corresponding to the antenna port for the second reference signal and indicated by the configuration pattern.

With reference to the second aspect and the foregoing implementations of the second aspect, in a third implementation of the second aspect, the second time-frequency resource includes a part or all of the first time-frequency resource.

With reference to the second aspect and the foregoing implementations of the second aspect, in a fourth implementation of the second aspect, the first reference signal is sent to one receiving device, and the second reference signal is sent to a receiving device group including a plurality of receiving devices.

With reference to the second aspect and the foregoing implementations of the second aspect, in a fifth implementation of the second aspect, that a type of the first reference signal is different from a type of the second reference signal includes: the first reference signal is used for data channel demodulation, and the second reference signal is used for control channel demodulation; or the first reference signal is used for channel measurement, and the second reference signal is used for control channel demodulation; or the first reference signal is used for data channel demodulation, and the second reference signal is used for channel measurement.

With reference to the second aspect and the foregoing implementations of the second aspect, in a sixth implementation of the second aspect, the second reference signal is not precoded.

With reference to the second aspect and the foregoing implementations of the second aspect, in a seventh implementation of the second aspect, the second reference signal is sent by a second sending device.

With reference to the second aspect and the foregoing implementations of the second aspect, in an eighth implementation of the second aspect, at least one of the plurality of antenna ports is further used to send a third reference signal; the third reference signal is at least one of the at least two types of reference signals; a type of the third reference signal is different from the type of the first reference signal, and the type of the third reference signal is different from the type of the second reference signal; the third reference signal is carried on a third time-frequency resource; and the third time-frequency resource is a time-frequency resource corresponding to the antenna port for the third reference signal and indicated by the configuration pattern.

With reference to the second aspect and the foregoing implementations of the second aspect, in a ninth implementation of the second aspect, the third time-frequency resource includes a part or all of the first time-frequency resource, and the third time-frequency resource includes a part or all of the second time-frequency resource.

With reference to the second aspect and the foregoing implementations of the second aspect, in a tenth implementation of the second aspect, that a type of the third reference signal is different from the type of the first reference signal, and the type of the third reference signal is different from the type of the second reference signal includes: the first reference signal is used for data channel demodulation, the second reference signal is used for control channel demodulation, and the third reference signal is used for channel measurement.

With reference to the second aspect and the foregoing implementations of the second aspect, in an eleventh implementation of the second aspect, the third reference signal is sent by a third sending device.

With reference to the second aspect and the foregoing implementations of the second aspect, in a twelfth implementation of the second aspect, functions of the at least two types of reference signals are different, and the function includes at least one of the following: automatic gain control AGC adjustment, time-frequency synchronization, phase compensation, physical data channel demodulation, physical control channel demodulation, channel state information measurement, radio resource management RRM measurement, or positioning measurement.

With reference to the second aspect and the foregoing implementations of the second aspect, in a thirteenth implementation of the second aspect, the at least two types of reference signals include at least two of a cell-common reference signal CRS, a channel state information-reference signal CSI-RS, or a demodulation reference signal DMRS.

According to a third aspect, an apparatus for sending a reference signal is provided. The apparatus includes units configured to perform steps of the method for sending a reference signal according to the first aspect and the implementations of the first aspect.

According to a fourth aspect, an apparatus for receiving a reference signal is provided. The apparatus includes units configured to perform steps of the method for receiving a reference signal according to the second aspect and the implementations of the second aspect.

According to a fifth aspect, a device for sending a reference signal is provided. The device includes a memory and a processor. The memory is configured to store a computer program, and the processor is configured to invoke the computer program from the memory and run the computer program, to enable the device for sending a reference signal to perform the method for sending a reference signal according to any one of the first aspect and the implementations of the first aspect.

According to a sixth aspect, a device for receiving a reference signal is provided. The device includes a memory and a processor. The memory is configured to store a computer program, and the processor is configured to invoke the computer program from the memory and run the computer program, to enable the device for receiving a reference signal to perform the method for receiving a reference signal according to any one of the second aspect and the implementations of the second aspect.

According to a seventh aspect, a computer program product is provided. The computer program product includes computer program code. When the computer program code is run by a processing unit and a sending unit, or a processor and a transmitter in a sending device, the sending device is enabled to perform the method for sending a reference signal according to any one of the first aspect and the implementations of the first aspect.

According to an eighth aspect, a computer program product is provided. The computer program product includes computer program code. When the computer program code is run by a receiving unit and a processing unit, or a receiver and a processor in a receiving device, the receiving device is enabled to perform the method for receiving a reference signal according to any one of the second aspect and the implementations of the second aspect.

According to a ninth aspect, a computer-readable storage medium is provided. The computer-readable storage medium stores a program, and the program enables a sending device to perform the method for sending a reference signal according to any one of the first aspect and the implementations of the first aspect.

According to a tenth aspect, a computer-readable storage medium is provided. The computer-readable storage medium stores a program, and the program enables a receiving device to perform the method for receiving a reference signal according to any one of the second aspect and the implementations of the second aspect.

According to the method and the apparatus for a reference signal and the method and the apparatus for receiving a reference signal in the embodiments of the present invention, time-frequency resources of different types of reference signals are determined by using a same configuration pattern, to reduce design difficulty of a configuration pattern, and reduce processing load when a sending device and a receiving device send a reference signal.

BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic architectural diagram of a communications system according to an embodiment of the present invention;

FIG. 2 is a schematic diagram of an example of a manner of carrying a reference signal on a time-frequency resource according to an embodiment of the present invention;

FIG. 3 is a schematic diagram of an example of a configuration pattern according to an embodiment of the present invention;

FIG. 4 is a schematic diagram of another example of a configuration pattern according to an embodiment of the present invention;

FIG. 5 is a schematic interaction diagram of a method for sending and receiving a reference signal according to an embodiment of the present invention;

FIG. 6 is a schematic diagram of a case in which a reference signal carries precoding information;

FIG. 7 is a schematic diagram of an example of a transmission mode of a reference signal according to an embodiment of the present invention;

FIG. 8 is a schematic diagram of another example of a transmission mode of a reference signal according to an embodiment of the present invention;

FIG. 9 is a schematic diagram of still another example of a transmission mode of a reference signal according to an embodiment of the present invention;

FIG. 10 is a schematic diagram of still another example of a transmission mode of a reference signal according to an embodiment of the present invention;

FIG. 11 is a schematic block diagram of an apparatus for sending a reference signal according to an embodiment of the present invention; and

FIG. 12 is a schematic block diagram of an apparatus for receiving a reference signal according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

Solutions in the embodiments of the present invention are applicable to an existing cellular communications system, for example, a system such as a Global System for Mobile Communications (English full name: Global System for Mobile Communication, GSM for short), a Code Division Multiple Access (English full name: Code Division Multiple Access, CDMA for short) system, a Wideband Code Division Multiple Access (English full name: Wideband Code Division Multiple Access, WCDMA for short) system, a general packet radio service (English full name: General Packet Radio Service, GPRS for short) system, a Universal Mobile Telecommunications System (English full name: Universal Mobile Telecommunications System, UMTS for short), a Long Term Evolution (English full name: Long Term Evolution, LTE for short) system, and especially applicable to a 4.5G LTE-advanced system and a 5G wireless communications system. Supported communication is mainly for voice and data communication. Generally, connections supported by a conventional base station are limited in quantity, and therefore are easily implemented.

A next-generation mobile communications system supports not only conventional communication but also M2M (English full name: Machine to Machine) communication that is also referred to as MTC (English full name: Machine Type Communication) communication. It is predicted that, by 2020, there will be 50 billion to 100 billion MTC devices connected to a network, and this is much greater than a current quantity of connections. Because service types of M2M services differ greatly, requirements on a network are much different. Generally, there are the following several requirements:

a requirement for reliable transmission insensitive to a delay; and
a requirement for a low delay and high reliability of transmission.

A service that requires reliable transmission insensitive to a delay is relatively easy to be processed. However, for a service that requires a low delay but highly reliable transmission, for example, a V2V (English full name: Vehicle to Vehicle) service, transmission is required to be both short in delay and reliable. Unreliable transmission causes retransmission, resulting in an extremely high transmission delay. This cannot meet the requirement.

Because of a large quantity of connections, a future wireless communications system and an existing communications system are much different. Because of a large quantity of connections, more resources need to be consumed for connecting to a terminal device and more resources need to be consumed for transmitting scheduling signaling related to data transmission of the terminal device. According to the solutions in the embodiments of the present invention, the foregoing resource consumption problem can be effectively resolved.

Optionally, the sending device may be a network device, and the receiving device may be a terminal device; or

the sending device may be a terminal device, and the receiving device may be a network device.

Specifically, in the embodiments of the present invention, the first signal may be a signal sent by a terminal device to a network device, or the first signal may be a signal sent by a network device to a terminal device. This is not particularly limited in the present invention.

Optionally, the network device is a base station, and the terminal device is user equipment.

In the present invention, the embodiments are described with reference to a terminal device. The terminal device may also be referred to as user equipment (UE, User Equipment), an access terminal, a subscriber unit, a subscriber station, a mobile station, a mobile console, a remote station, a remote terminal, a mobile device, a user terminal, a terminal, a wireless communications device, a user agent, a user apparatus, or the like. The terminal device may be a station (STATION, ST) in a wireless local area network (Wireless Local Area Networks, WLAN), a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, an in-vehicle device, a wearable device, a terminal device in a future 5G network, or a terminal device in a future evolved PLMN network.

In addition, in the present invention, the embodiments are described with reference to a network device. The network device may be a device configured to communicate with a mobile device. The network device may be an access point (ACCESS POINT, AP) in a WLAN or a base transceiver station (Base Transceiver Station, BTS) in GSM or Code Division Multiple Access (Code Division Multiple Access, CDMA); or may be a NodeB (NodeB, NB) in WCDMA; or may be an evolved NodeB (Evolutional Node B, eNB or eNodeB) in Long Term Evolution (Long Term Evolution, LTE), or a relay node or an access point, or an in-vehicle device, a wearable device, a network device in a future 5G network, a network device in a future evolved PLMN network, or the like.

In addition, in the present invention, the embodiments are described with reference to a cell. The cell may be a cell corresponding to a network device (such as a base station). The cell may belong to a macro base station, or may belong to a base station corresponding to a small cell (small cell). Herein, the small cell may include a metro cell (Metro cell), a micro cell (Micro cell), a pico cell (Pico cell), a femto cell (Femto cell), and the like, and these small cells feature small coverage and low transmit power and are applicable to providing a high-rate data transmission service.

In addition, a plurality of cells may operate on a same frequency on a carrier in an LTE system. In some special scenarios, it may also be considered that a concept of a carrier in the LTE system is equivalent to that of a cell. For example, in a carrier aggregation (CA, Carrier Aggregation) scenario, when a secondary component carrier is configured for UE, a carrier index of the secondary component carrier and a cell identity (Cell Indentify, Cell ID) of a secondary serving cell operating on the secondary component carrier are both carried. In this case, it may be considered that a concept of a carrier is equivalent to that of a cell, for example, access by UE to a carrier is equivalent to access to a cell.

A signal transmission method and apparatus provided in embodiments of the present invention are applicable to a terminal device or a network device. The terminal device or the network device includes a hardware layer, an operating system layer run on the hardware layer, and an application layer run on the operating system layer. The hardware layer includes hardware such as a central processing unit (Central Processing Unit, CPU), a memory management unit (MMU, Memory Management Unit), and a memory (also referred to as a main memory). The operating system may be any one or more computer operating systems such as a Linux operating system, a Unix operating system, an Android operating system, an iOS operating system, or a Windows operating system that implement service processing by using a process (Process). The application layer includes an application such as a browser, an address book, word processing software, or instant messaging software. In addition, in the embodiments of the present invention, a specific structure of an execution body of the signal transmission method is not particularly limited in the present invention, provided that communication can be performed according to the signal transmission method in the embodiments of the present invention by running a program of code recording the signal transmission

11       **EP 3 493 589 A1**       12

method in the embodiments of the present invention. For example, the execution body of the reference signal transmission method in the embodiments of the present invention may be a terminal device or a network device, or a functional module that is in a terminal device or a network device and that can invoke a program and execute the program.

In addition, aspects or features of the present invention may be implemented as a method, an apparatus, or a product that uses standard programming and/or engineering technologies. The term "product" used in this application covers a computer program that can be accessed from any computer readable component, carrier or medium. For example, the computer-readable medium may include but is not limited to: a magnetic storage component (such as a hard disk, a floppy disk, or a magnetic tape), an optical disc (for example, a compact disc (Compact Disc, CD), or a digital versatile disc (Digital Versatile Disc, DVD)), a smart card, and a flash memory component (such as an erasable programmable read-only memory (Erasable Programmable Read-Only Memory, EPROM), a card, a stick, or a key drive). In addition, various storage media described in this specification may indicate one or more devices and/or other machine-readable media that is used to store information. The term "machine readable media" may include but is not limited to a radio channel, and various other media that can store, contain and/or carry an instruction and/or data.

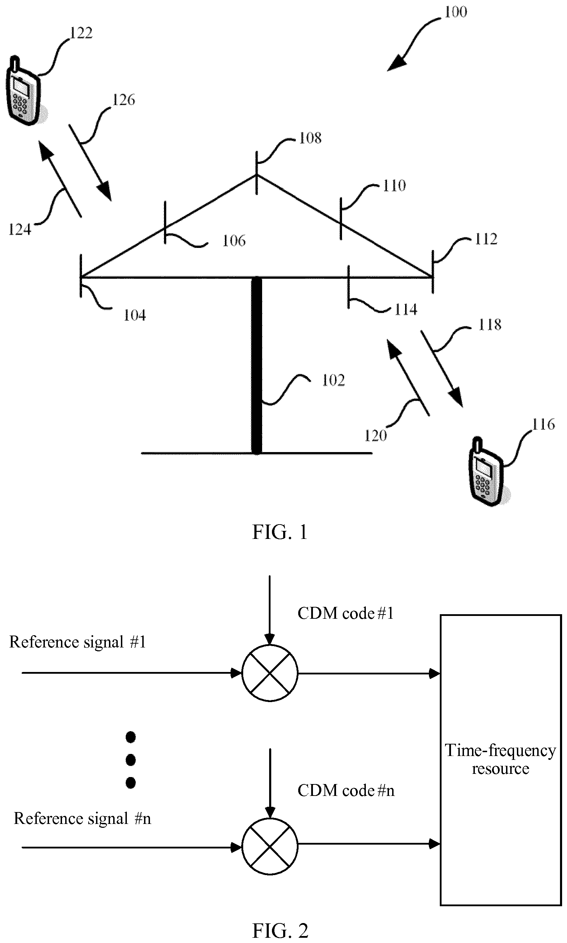

FIG. 1 is a schematic diagram of a communications system for information transmission using the present invention. As shown in FIG. 1, the communications system 100 includes a network device 102. The network device 102 may include a plurality of antennas, for example, antennas 104, 106, 108, 110, 112, and 114. In addition, the network device 102 may additionally include a transmitter chain and a receiver chain, and a person of ordinary skill in the art may understand that both the transmitter chain and the receiver chain may include a plurality of components (such as a processor, a modulator, a multiplexer, a demodulator, a demultiplexer, and an antenna) related to signal sending and receiving.

The network device 102 may communicate with a plurality of terminal devices (such as a terminal device 116 and a terminal device 122). However, it may be understood that the network device 102 may communicate with any quantity of terminal devices similar to the terminal device 116 or 122. The terminal devices 116 and 122 may each be, for example, a cellular phone, a smartphone, a portable computer, a handheld communications device, a handheld computing device, a satellite radio apparatus, a global positioning system, a PDA, and/or any other suitable device configured to perform communication in the wireless communications system 100.

As shown in FIG. 1, the terminal device 116 communicates with the antennas 112 and 114. The antennas 112 and 114 send information to the terminal device 116 through a forward link 118, and receive information from the terminal device 116 through a reverse link 120. In addition, the terminal device 122 communicates with the antennas 104 and 106. The antennas 104 and 106 send information to the terminal device 122 through a forward link 124, and receive information from the terminal device 122 through a reverse link 126.

For example, in a frequency division duplex (FDD, Frequency Division Duplex) system, the forward link 118 and the reverse link 120 may use different frequency bands, and the forward link 124 and the reverse link 126 may use different frequency bands.

For another example, in a time division duplex (TDD, Time Division Duplex) system and a full duplex (Full Duplex) system, the forward link 118 and the reverse link 120 may use a same frequency band, and the forward link 124 and the reverse link 126 may use a same frequency band.

Each antenna (or an antenna group including a plurality of antennas) and/or an area designed for communication are/is referred to as a sector of the network device 102. For example, an antenna group may be designed to communicate with a terminal device in a sector within coverage of the network device 102. In a process in which the network device 102 communicates with the terminal devices 116 and 122 respectively through the forward links 118 and 124, a transmit antenna of the network device 102 may improve signal-to-noise ratios of the forward links 118 and 124 through beamforming. In addition, compared with a manner in which the network device sends, through a single antenna, a signal to all terminal devices served by the network device, when the network device 102 sends, through beamforming, a signal to the terminal devices 116 and 122 that are randomly distributed within related coverage, less interference is caused to a mobile device in a neighboring cell.

In a given time, the network device 102, the terminal device 116, or the terminal device 122 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store in a memory) a particular quantity of data bits to be sent, through a channel, to the wireless communications receiving apparatus. The data bit may be included in a transport block (or a plurality of transport blocks) of data, and the transport block may be segmented to produce a plurality of code blocks.

In addition, the communications system 100 may be a public land mobile network (English full name: Public Land Mobile Network, PLMN for short) network or a D2D network or an M2M network or another network. FIG. 1 is merely an example of a simplified schematic diagram, and the network may further include another network device that is not shown in FIG. 1.

It should be noted that, in the embodiments of the present invention, a sending device may be the net-

7

work device 102 or the terminal device (such as the terminal device 116 or the terminal device 122); and correspondingly, a receive end device may be the terminal device (such as the terminal device 116 or the terminal device 122) or the network device 102. This is not particularly limited in the present invention.

A transmission object in the embodiments of the present invention is described in detail below.

Specifically, the transmission object in the embodiments of the present invention may be a reference signal (Reference Signal, RS) that may also be referred to as a pilot signal (Pilot Signal), and is a known signal provided by a transmit end device to a receiving device for channel estimation, channel sounding, channel demodulation, or the like.

In the embodiments of the present invention, the reference signal is applicable to a physical layer and carries no data information from a higher layer. In addition, the reference signal may include a downlink reference signal and an uplink reference signal.

The downlink reference signal includes a downlink cell-specific reference signal (Cell-specific Reference Signal, CRS), a downlink terminal device-specific reference signal (UE-specific Reference Signal, UE-RS), a channel state information-reference signal (CSI-RS) used for downlink channel measurement, a downlink group-specific reference signal (Group-specific Reference Signal, GRS), or the like. The downlink UE-RS is also referred to as a downlink demodulation reference signal (Demodulation Reference Signal, DMRS).

The uplink reference signal includes a demodulation reference signal (Demodulation Reference Signal, DMRS) used for uplink demodulation, a sounding reference signal (Sounding reference signal, SRS) used for uplink channel measurement, or the like. A DMRS used for PUCCH demodulation is referred to as a PUCCH DMRS, and a DMRS used for PUSCH demodulation is referred to as a PUSCH DMRS.

In addition to the reference signal, the transmission object in the present invention may be a sequence signal having autocorrelation. To be specific, in the embodiments of the present invention, the sending device may send a plurality of signals, where at least one of the signals is a sequence signal having autocorrelation.

Specifically, autocorrelation is dependency between an instantaneous value of a signal at a moment and an instantaneous value of the signal at another moment, and is a time domain description of the signal. Therefore, for a sequence signal having autocorrelation, the receiving device can detect, based on the autocorrelation, whether the signal exists. To be specific, a detection mechanism such as a pilot is not required for transmission of the sequence signal having autocorrelation. A reference signal (or referred to as a pilot signal) may be one type of signal having autocorrelation.

It should be understood that, a specific example of the sequence signal illustrated above is merely for illustration purposes, and the present invention is not limited thereto. For example, the sequence signal may alternatively be a signal used to carry feedback information (such as acknowledgement (ACK) information or negative acknowledgement (NACK) information), a resource request signal, or a measurement request signal.

For ease of understanding and description, a reference signal is used as an example below to describe a signal transmission process in the embodiments of the present invention.

In the embodiments of the present invention, a signal (such as a reference signal) has one or more signal parameters (which may also be referred to as attribute parameters), and at least one of signal parameters of different types of signals is different. To be specific, in the embodiments of the present invention, signals may be classified into a plurality of types based on the signal parameters. In this case, in the embodiments of the present invention, that "a type of a first reference signal is different from a type of a second reference signal" may mean that the types of the first reference signal and the second reference signal are different, or at least one of signal parameters of the first reference signal and the second reference signal is different.

Optionally, in the embodiments of the present invention, at least one of signal parameters of at least two types of reference signals is different, and the signal parameter includes at least one of the following parameters: a channel corresponding to the signal, a function of the signal, a link used by the signal, a transmission direction of the signal, a carrier used by a cell to which a transmission device of the signal belongs, and a sending device of the signal.

To be specific, in the embodiments of the present invention, a type of a reference signal may be classified based on a signal parameter of the reference signal.

The foregoing signal parameter and a type classification method based on the signal parameter are described in detail below.

A signal parameter A is a channel corresponding to a signal.

Optionally, the channel corresponding to the signal includes a channel used for data transmission or a channel used for control information transmission.

Specifically, in the embodiments of the present invention, for example, a signal (such as a reference signal) may be classified based on a channel (or referred to as a corresponding channel) used by the signal.

The channel may include the following:

A1. Channel used for data transmission

For example, the channel is a physical uplink data channel (Physical Uplink Shared Channel, PUSCH) or a physical downlink data channel (Physical Downlink Shared Channel, PDSCH).

A2. Channel used for control information transmission

For example, the channel is a physical uplink control channel (Physical Uplink Control Channel, PUCCH) or a physical downlink control channel (Physical Downlink Control Channel, PDCCH).

It should be understood that, the specific channels illustrated above are merely for illustration purposes, and the present invention is not limited thereto. For example, the channel may further include an enhanced physical downlink control channel (Enhanced-Physical Downlink Control Channel, EPDCCH), a physical control format indicator channel (Physical Control Format Indicator Channel, PCFICH), or a physical hybrid ARQ indicator channel (Physical hybrid ARQ indicator channel, PHICH), or new channels having a same function but different names and introduced to a standard, for example, a control channel introduced to short TTI (sTTI) transmission, such as a short TTI physical downlink control channel (sTTI Physical Downlink Control Channel, sPDCCH), or a data channel introduced to short TTI transmission, such as a short TTI physical downlink shared channel (sTTI Physical Downlink Shared Channel, sPDSCH).

To be specific, in the embodiments of the present invention, that types of two reference signals are different may include the following meaning: a channel used by one type of reference signal (such as one of the first reference signal, the second reference signal, and a third reference signal; for ease of understanding and description, referred to as a first-type reference signal below) is different from a channel used by another type of reference signal (such as another of the first reference signal, the second reference signal, and the third reference signal; for ease of understanding and description, referred to as a second-type reference signal below). For example, a channel corresponding to the first reference signal may be one of the channels (such as the PUCCH, the PUSCH, the PDCCH, or the PDSCH) shown by A1 and A2 above, and a channel corresponding to the second reference signal may be another of the channels (such as the PUCCH, the PUSCH, the PDCCH, or the PDSCH) shown by A1 and A2 above.

A signal parameter B is a function of a signal.

Optionally, a function of the first-type reference signal is different from a function of the second-type reference signal, and the function of the first-type reference signal and the function of the second-type reference signal are two of the following functions: phase compensation, carrying ACK/NACK information, carrying resource request information, carrying measurement request information, automatic gain control AGC adjustment, time-frequency synchronization, physical data channel demodulation, physical control channel demodulation, channel state information measurement, radio resource management RRM measurement, or positioning measurement.

Specifically, in the embodiments of the present invention, for example, a signal (such as a reference signal) may be classified based on a function of the signal.

The function may include the following:

B1. Data channel demodulation

Specifically, in the embodiments of the present invention, a channel on which a signal (such as a reference signal) is carried may carry modulated data, so that the signal (such as a reference signal) may be used to demodulate the data.

By way of example, and not limitation, the signal used for channel demodulation may be, for example, a demodulation reference signal (Demodulation Reference Signal, DMRS) or a common reference signal (Common Reference Signal, CRS).

In addition, a specific method and process of "data channel demodulation" in the embodiments of the present invention may be similar to those in the prior art. Herein, to avoid repeated descriptions, detailed descriptions thereof are omitted.

In addition, by way of example, and not limitation, a channel (or referred to as a demodulated channel) used by the signal (such as the DMRS) used for data channel demodulation may be an uplink channel (such as a PUSCH) or a downlink channel (such as a PDSCH). This is not particularly limited in the present invention.

B2. Control channel demodulation

Specifically, in the embodiments of the present invention, a channel on which a signal (such as a reference signal) is carried may carry modulated control information, so that the signal (such as a reference signal) may be used to demodulate the control information.

By way of example, and not limitation, the signal used for channel demodulation may be, for example, a DMRS or a CRS.

In addition, a specific method and process of "control channel demodulation" in the embodiments of the present invention may be similar to those in the prior art. Herein, to avoid repeated descriptions, detailed descriptions thereof are omitted.

In addition, by way of example, and not limitation, a channel (or referred to as a demodulated channel) used by the signal (such as the DMRS) used for control channel demodulation may be an uplink channel (such as a PUCCH) or a downlink channel (such as a PDCCH). This is not particularly limited in the present invention.

B3. Channel measurement

Channel measurement is also referred to as channel state information measurement. Specifically, in the embodiments of the present invention, a signal (such as a reference signal) may be used to measure a channel on which the signal is carried, for example, measure a rank and/or a precoding matrix and/or a CQI of the channel.

By way of example, and not limitation, the signal used for channel measurement may be, for example, a channel state information-reference signal (Channel State Information-Reference Signal, CSI-RS), a sounding reference signal (Sounding Reference Signal, SRS), or a common reference signal (Common Reference Signal, CRS).

In addition, a specific method and process of "channel measurement" in the embodiments of the present invention may be similar to those in the prior art. Herein, to avoid repeated descriptions, detailed descriptions thereof are omitted.

In addition, by way of example, and not limitation, a channel (or referred to as a measured channel) used by the signal (such as the CSI-RS) used for channel measurement may be an uplink channel (such as a PUSCH or a PUCCH) or a downlink channel (such as a PDCCH or a PDSCH). This is not particularly limited in the present invention.

B4. Phase compensation

Specifically, in the embodiments of the present invention, a signal (such as a reference signal) may be used to perform phase compensation on a channel on which the signal is carried.

In addition, a specific method and process of "phase compensation" in the embodiments of the present invention may be similar to those in the prior art. Herein, to avoid repeated descriptions, detailed descriptions thereof are omitted.

B5. Carrying feedback information

Specifically, in the embodiments of the present invention, a signal (such as a reference signal) may be used for feedback processing such as hybrid automatic repeat request (Hybrid Automatic Repeat reQuest, HARQ) processing. To be specific, the signal (such as a first signal and/or a second signal) may be used to carry feedback information such as acknowledgement ACK information or NACK information.

B6. Carrying resource request information

Specifically, in the embodiments of the present invention, a signal (such as a reference signal) may be used to perform a resource request process. To be specific, the signal may be a signal used to carry resource request information (such as resource scheduling request information). By way of example, and not limitation, the resource request information may be request information for requesting to allocate a time-frequency resource used to transmit data (such as uplink data or downlink data).

B7. Carrying measurement request information

Specifically, in the embodiments of the present invention, a signal (such as a reference signal) may be used to perform a measurement request process. To be specific, the signal may be a signal used to carry measurement request information. By way of example, and not limitation, the measurement request information may be request information for requesting to measure an uplink channel or a downlink channel.

B8. Automatic gain control AGC adjustment

Specifically, automatic gain control (Automatic Gain Control, AGC) is an automatic control method that enables a gain of an amplification circuit to be automatically adjusted with signal strength. Automatic gain control is one type of limiting output, in which an output signal is adjusted by using an effective combination of linear amplification and compressed amplification. When a weak signal is input, a linear amplification circuit operates, to ensure strength of an output signal. When strength of an input signal reaches particular strength, a compressed amplification circuit is enabled to reduce an output amplitude. In other words, based on the AGC function, an amplitude of a gain can be automatically controlled by changing an input-output compression ratio.

In the embodiments of the present invention, a signal (such as a reference signal) may be used in an AGC adjustment process, and a purpose and a use method of the reference signal in the AGC adjustment process may be similar to those in the prior art. Herein, to avoid repeated descriptions, detailed descriptions thereof are omitted.

B9. Time-frequency synchronization

In the embodiments of the present invention, a signal (such as a reference signal) may be used for time-frequency synchronization, and a purpose and a use method of the reference signal in a time-frequency synchronization process may be similar to those in the prior art. Herein, to avoid repeated descriptions, detailed descriptions thereof are omitted.

B10. Radio resource management RRM measurement

Specifically, radio resource management (Radio Resource Management, RRM) is to provide service quality assurance for a wireless user terminal in a network under the condition of a limited bandwidth. A basic goal of RRM is to flexibly allocate and dynamically adjust, when network traffic distribution is non-uniform and a channel feature fluctuates due to channel fading and interference, resources available for a wireless transmission part and a network, so as to maximize radio spectrum utilization, and prevent network congestion and maintain signaling load as low as possible.

In the embodiments of the present invention, a signal (such as a reference signal) may be used in an RRM measurement process, and a purpose and a use method of the reference signal in the RRM measurement process may be similar to those in the prior art. Herein, to avoid repeated descriptions, detailed descriptions thereof are omitted.

B11. Positioning measurement

In the embodiments of the present invention, a signal (such as a reference signal) may be used in a positioning measurement process, and a purpose and a use method of the reference signal in the positioning measurement process may be similar to those in the prior art. Herein, to avoid repeated descriptions, detailed descriptions thereof are omitted.

To be specific, in the embodiments of the present invention, that "at least one of signal parameters of the first-type reference signal and the second-type reference signal is different" may include the following meaning: the function of the first-type reference signal is different from the function of the second-type reference signal. For example, the function of the first-type reference signal may be one of the functions shown by B1 to B11 above, and the function of the second-type reference signal may be another of the functions shown by B1 to B11 above.

A signal parameter C is a link used by a signal.

Optionally, the link used by a signal includes a link between a network device and a terminal device, a link between network devices, or a link between terminal devices.

Specifically, in the embodiments of the present invention, for example, a signal (such as a reference signal) may be classified based on a link (or referred to as a corresponding link) used by the signal.

The link may include the following:

C1. Link between a network device and a terminal device

The link may also be referred to as a cellular network (Cellular) link, and is used for communication between the network device (such as an eNB) and the terminal device.

C2. Link between network devices

The link may also be referred to as a backhaul (backhaul) link, and is used for communication between a network device (such as an eNB) and another network device (such as an eNB or a gateway device).

C3. Link between terminal devices

The link may also be referred to as a (sidelink) link, and is used for communication between the terminal devices.

To be specific, in the embodiments of the present invention, that "at least one of the signal parameters of the first-type reference signal and the second-type reference signal is different" may include the following meaning: a link used by the first-type reference signal is different from a link used by the second-type reference signal. For example, the link corresponding to the first-type reference signal may be one of the links shown by C1 to C3 above, and the link corresponding to the second-type reference signal may be another of the links shown by C1 to C3 above.

A signal parameter D is a transmission direction of a signal.

Optionally, the transmission direction of the signal includes uplink transmission or downlink transmission.

Specifically, in the embodiments of the present invention, for example, a signal may be classified based on a transmission direction of the signal.

The transmission direction may include the following:

D1. Uplink transmission

In this case, the signal may be sent by a terminal device to a network device.

D2. Downlink transmission

In this case, the signal may be sent by a network device to a terminal device.

To be specific, in the embodiments of the present invention, that "at least one of signal parameters of the first-type reference signal and the second-type reference signal is different" may include the following meaning: a transmission direction of the first-type reference signal is different from a transmission direction of the second-type reference signal. For example, the transmission direction of the first-type reference signal may be one of the transmission directions shown by D1 and D2 above, and the transmission direction of the second-type reference signal may be the other of the transmission directions shown by D1 and D2 above.

A signal parameter E is a carrier used by a cell to which a transmission device of a signal belongs.

Specifically, in the embodiments of the present invention, the carrier may be a carrier for a cell in which a network device or a terminal device sending or receiving the signal is located.

To be specific, in the embodiments of the present invention, that "at least one of signal parameters of the first-type reference signal and the second-type reference signal is different" may include the following meaning: a carrier (for ease of understanding and description, referred to as a first carrier below) for a cell in which a first device (namely, a network device or a terminal device transmitting the first-type reference signal) is located is different from a carrier (for ease of understanding and description, referred to as a second carrier below) for a cell in which a second device (namely, a network device or a terminal device transmitting the first-type reference signal) is located, and the first carrier and the second carrier have an overlapping part.

That "a first carrier is different from a second carrier, and the first carrier and the second carrier have an overlapping part" may include the following meaning:

1. A frequency domain range of the first carrier is greater than a frequency domain range of the second carrier, and the frequency domain range of the second carrier falls within the frequency domain range of the first carrier.

2. A frequency domain range of the first carrier is less than a frequency domain range of the second carrier, and the frequency domain range of the first carrier falls within the frequency domain range of the second carrier.

3. A frequency domain range of the first carrier is different from a frequency domain range of the second carrier, and the frequency domain range of the first carrier partially overlaps the frequency domain range of the second carrier.

A signal parameter F is a sending device of a signal.

To be specific, in the embodiments of the present invention, that "at least one of signal parameters of the first-type reference signal and the second-type reference signal is different" may include the following meaning: a sending device of the first-type reference signal is different from a sending device of the second-type reference signal.

That "a sending device of the first-type reference signal is different from a sending device of the second-type reference signal" may mean that the sending device of the first-type reference signal is a network device, and the sending device of the second-type reference signal is a terminal device.

Alternatively, that "a sending device of the first-type reference signal is different from a sending device of the second-type reference signal" may mean that the sending device of the first-type reference signal is a terminal device, and the sending device of the second-type reference signal is a network device.

Alternatively, that "a sending device of the first-type reference signal is different from a sending device of the second-type reference signal" may mean that the sending device of the first-type reference signal is a terminal device, and the sending device of the second-type reference signal is another terminal device. The two terminal devices that respectively send the first-type reference signal and the second-type reference signal may be located in a same cell (for example, access a same network device) or located in different cells (for example, access different network devices). This is not particularly limited in the present invention.

Alternatively, that "a sending device of the first-type reference signal is different from a sending device of the second-type reference signal" may mean that the sending device of the first-type reference signal is a network device, and the sending device of the second-type reference signal is another network device. The two network devices that respectively send the first-type reference signal and the second-type reference signal may be intra-frequency deployment or inter-frequency deployment. This is not particularly limited in the present invention.

As shown in FIG. 2, in the embodiments of the present invention, different types of reference signals may be multiplexed on a same time-frequency resource based on different code resources.

Optionally, the code resource includes a Code Division Multiple Access CDMA code.

Specifically, in the embodiments of the present invention, different types of reference signals may be multiplexed, based on, for example, a code division multiplexing (code division multiplexing, CDM) technology, on a time-frequency resource for transmission. A communication scheme that implements multiplexing by using orthogonality of various signal code structures is referred to as Code Division Multiple Access (Code Division Multiple Access, CDMA). CDM is different from FDM (frequency division multiplexing) and TDM (time division multiplexing). In CDM, a channel frequency is shared, and a time is also shared. CDM is an actual dynamic multiplexing technology. A principle of CDM is diving each bit time into m shorter timeslots that are referred to as chips (Chip). Generally, each bit includes 64 or 128 chips. A unique m-bit code or chip sequence is specified for each station (or referred to as a channel). When 1 is sent, the station sends a chip sequence, and when 0 is sent, the station sends a ones' complement of the chip sequence. When two or more stations perform simultaneous transmission, various pieces of data are linearly added on a channel. To separate various signals on the channel, chip sequences of the stations need to be orthogonal.

To be specific, if S and T are used to indicate two different chip sequences, and !S and !T are used to indicate ones' complements of the respective chip sequences, there should be that $S \cdot T = 0$, $S \cdot !T = 0$, $S \cdot S = 1$, $S \cdot !S = -1$. When a station needs to receive data sent by a station X, the station needs to learn of a chip sequence (set to S) of X first. If a sum vector received from a channel is P, the data sent by X can be extracted by calculating a value of $S \cdot P$. If $S \cdot P = 0$, it indicates that X sends no data. If $S \cdot P = 1$, it indicates that X sends 1. If $S \cdot P = -1$, it indicates that X sends 0.

Code division multiplexing is also a channel sharing method. Each user may simultaneously use a same frequency band for communication, but use a channel division method based on a code. To be specific, an address code is allocated to each user, and the codes are non-overlapping. Communication parties do not interfere with each other, and an anti-interference capability is strong.

It should be understood that, the CDMA code illustrated above as a code resource is merely for illustration purposes, and the present invention is not limited thereto. Other code resources that can be used to transmit a reference signal all fall within the protection scope of the present invention. A Walsh (Walsh) orthogonal sequence, a Zadoff-Chu (Zadoff-Chu, ZC) sequence, a sparse code multiple access (SCMA, Sparse Code Multiple Access) codebook, a low density signature (LDS, Low Density Signature) sequence, and the like may further be illustrated.

A Walsh orthogonal sequence having a length of L is as follows:

$$W = e^{j\alpha n}, n = 0, 1, ..., L-1 .$$

In the foregoing formula, $\alpha$ indicates a cyclic shift, and $\alpha$ may be obtained by using the following formula:

$$\alpha = \frac{2\pi m}{L} ,$$

where m is any integer less than L, different values of the cyclic shift $\alpha$ may be obtained based on different values of m, and each value of $\alpha$ corresponds to one Walsh orthogonal sequence, to be specific, one code resource can be obtained based on each value of $\alpha$.

In a ZC sequence having a length of L, if m is used to indicate a cyclic shift value, a value of m may be any integer less than L. When a cyclic shift is performed on the sequence by using one value of m, one sequence corresponding to the cyclic shift can be obtained. Sequences obtained by using different cyclic shift values are different orthogonal code resources.

The SCMA codebook includes at least two codewords, and the SCMA codebook is used to indicate a mapping relationship between a combination of at least two reference signals and the at least two codewords. The codeword is a multidimensional complex vector, and is used to indicate a mapping relationship between data and a plurality of symbol sequences. The symbol sequence includes at least one zero symbol and at least one non-zero symbol.

Specifically, SCMA is a non-orthogonal multiple access technology. Certainly, a person skilled in the art may refer to the technology as another technical name, instead of referring to the technology as SCMA. With the help of a codebook, in the technology, a plurality of different reference signals are transmitted on a same transmission resource. The different reference signals use different codebooks, thereby improving resource utilization. The reference signals may come from a same sending device or different sending devices.

A codebook used in SCMA is a set of two or more codewords.

A codeword may be a multidimensional complex domain vector, and a dimension quantity of the codeword is 2 or more. The codeword is used to indicate a mapping relationship between a reference signal and two or more symbol sequences. The mapping relationship may be a direct mapping relationship. The symbol sequence includes at least one zero symbol and at least one non-zero symbol. The reference signal may be a binary bit reference signal or a multilevel reference signal. Optionally, a relationship between a zero symbol and a non-zero symbol may be that a quantity of zero symbols is not less than a quantity of non-zero symbols.

A codebook includes two or more codewords. A codebook may indicate a mapping relationship between a possible reference signal combination of reference signals having a particular length and a codeword in the codebook, and the mapping relationship may be a direct mapping relationship.

In the SCMA technology, a reference signal is directly mapped to a codeword, namely, a multidimensional complex vector in a codebook based on a particular mapping relationship, to implement extended transmission of the reference signal on a plurality of resource elements. The direct mapping relationship in the SCMA technology may be understood as that the reference signal does not need to be mapped to an intermediate symbol sequence or another intermediate processing process is not required. Herein, the reference signal may be a binary bit reference signal or a multidimensional reference signal. The plurality of resource elements may be resource elements in time domain, frequency domain, space domain, time-frequency domain, spatial-temporal domain, or time-frequency-space domain.

A codeword used in SCMA may have particular sparsity. For example, a quantity of zero elements in the codeword may be not less than a quantity of modulation symbols, so that lower-complexity decoding can be performed on a receive end by using a multi-user detection technology. Herein, the relationship between the quantity of zero elements and the quantity of modulation symbols listed above is merely an example for description of sparsity, and the present invention is not limited thereto. A ratio of the quantity of zero elements to the quantity of non-zero elements may be randomly set as required.

In a communications system using SCMA, a plurality of users multiplex a same time-frequency resource block to transmit a reference signal. Each resource block includes several resource REs. Herein, an RE may be a subcarrier-symbol unit in an OFDM technology, or may be a time-domain or frequency-domain resource element in another air interface technology. For example, in an SCMA system including L terminal devices, an available resource is divided into several orthogonal time-frequency resource blocks, and each resource block includes U REs. The U REs may have a same position in time domain. When sending a reference signal, a terminal device #L first divides the to-be-sent reference signal into S-bit reference signal blocks, searches a codebook (determined by a network device and delivered by the network device to the terminal device) to map each reference signal block to a group of symbol sequences $X\#L=\{X\#L_1, X\#L_2, ..., X\#L_U\}$ that includes U symbols, where each symbol sequence corresponds to one RE in the resource block, and then generates a signal waveform according to the symbol sequences. For the S-bit reference signal blocks, each codebook includes 2S different modulation symbol groups, corresponding to 2S possible reference signal blocks.

The foregoing codebook may also be referred to as an SCMA codebook. The SCMA codebook is a set of SCMA codewords. An SCMA codeword is a mapping relationship between an information bit and a modulation symbol. To be specific, the SCMA codebook is a set of the foregoing mapping relationships.

In addition, in SCMA, in a symbol sequence $X\#k=\{X\#k_1, X\#k_2, ..., X\#k_L\}$ corresponding to each terminal device, at least one symbol is a zero symbol, and at least one symbol is a non-zero symbol. To be specific, for a reference signal of one terminal device, in L REs, the reference signal of the terminal device is carried on only some (at least one) of the L REs.

Optionally, the LDS sequence includes at least two signature sequences, and the LDS sequence is used to indicate a mapping relationship between a combination of at least two types of reference signals and the at least two signature sequences. The signature sequence is a multidimensional complex vector, the multidimensional vector includes at least one zero element and at least one non-zero element, and the signature sequence is used to adjust an amplitude and a phase of a reference signal.

Specifically, a low density signature (LDS, Low Density Signature) technology is also a non-orthogonal multiple access and transmission technology. Certainly, the LDS technology may also be referred to as another name in the communications field. In such a technology, O (O is an integer not less than 1) signals from one or more users are superposed onto P (P is an integer not less than 1) subcarriers for sending. Each reference signal is extended to the P subcarriers through sparse spreading. When a value of O is greater than P, such a technology can effectively improve a network capacity, including a quantity of users that can access a system, spectrum efficiency, and the like. Therefore, the LDS technology, as an important non-orthogonal access technology, has attracted more attention and becomes an important candidate access technology during evolution of a future wireless cellular network.

In addition, in the embodiments of the present invention, at least two types of reference signals share a configuration pattern.

A configuration pattern may also be referred to as a time-frequency resource configuration pattern, and is used to indicate a time-frequency resource corresponding to each of a plurality of antenna ports, and specifically, is used to indicate a position of the time-frequency resource corresponding to each antenna port in a system time-frequency resource.

A network device may preset a configuration pattern (which may also be referred to as a reference signal pattern). The configuration pattern indicates S antenna ports, where S>1. The S antenna ports may be configured to transmit two or more types of reference signals. It should be noted that, an antenna port may also be referred to as a port. An antenna port is a logical concept, and may correspond to a physical antenna, or may not correspond to a physical antenna. For example, a same physical antenna may use different antenna ports at different time to send a signal.

Optionally, any two of the S antenna ports correspond to different time-frequency resource patterns.

Optionally, at least two of the S antenna ports correspond to a same time-frequency resource pattern.

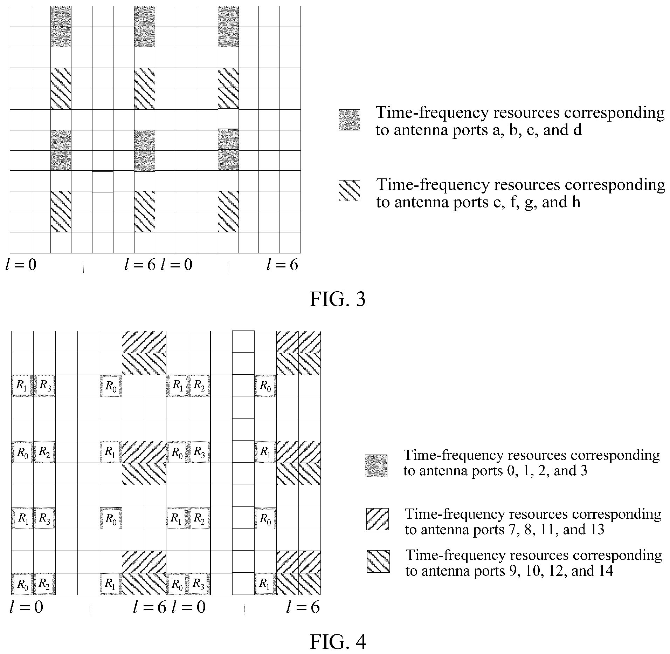

By way of example, and not limitation, FIG. 3 is a schematic diagram of an example of a configuration pattern according to an embodiment of the present invention. FIG. 3 is a schematic diagram of a time-frequency resource position occupied by each antenna port in the configuration pattern in one resource block (RB). As shown in FIG. 3, the configuration pattern includes eight antenna ports, to be specific, S=8. Antenna port numbers corresponding to the eight antenna ports are a, b, c, d, e, f, g, and h. The antenna ports a, b, c, and d occupy a same time-frequency resource position in the RB, and the antenna ports e, f, g, and h occupy a same time-frequency resource position in the RB. Different antenna ports occupying a same time-frequency resource position are distinguished by using different orthogonal codes in frequency domain (to be specific, in the RB, different orthogonal codes are used at time-frequency resource positions on different subcarriers corresponding to a same symbol). The orthogonal code may be one of the code resources in the embodiments of the present invention. By way of example, and not limitation, Table 1 provides orthogonal codes used by different antenna ports.

**Table 1**

| Antenna port | $[\overline{w}_p(0)\ \overline{w}_p(1)\ \overline{w}_p(2)\ \overline{w}_p(3)]$ |
|---|---|
| a | [+1 +1 +1 +1] |
| b | [+1 -1 +1 -1] |
| c | [+1 +1 -1 -1] |
| d | [+1 -1 -1 +1] |
| e | [+1 +1 +1 +1] |
| f | [+1 -1 +1 -1] |
| g | [-1 -1 +1 +1] |
| h | [-1 +1 +1 -1] |

The configuration pattern shown in FIG. 3 may be used to transmit two or more types of reference signals. For example, the antenna ports a and b are used for control channel demodulation, and the antenna ports c and d are used for data channel demodulation.

By way of example, and not limitation, FIG. 4 is a schematic diagram of another example of a configuration pattern according to an embodiment of the present invention. FIG. 4 is a schematic diagram of a time-frequency resource position occupied by each antenna port in the configuration pattern in one resource block (RB). As shown in FIG. 4, the configuration pattern includes 12 antenna ports, to be specific, S=12. Antenna port numbers corresponding to the 12 antenna ports are 0, 1, 2, 3, 7, 8, 9, 10, 11, 12, 13, and 14. Each of the antenna ports 0, 1, 2, and 3 occupies a time-frequency resource only used for transmission by the port, the antenna ports 7, 8, 11, and 13 occupy a same time-frequency resource position in the RB, and the antenna ports 9, 10, 12, and 14 occupy a same time-frequency resource position in the RB. Different antenna ports occupying a same time-frequency resource position are distinguished by using different orthogonal codes in time domain (to be specific, in the RB, different orthogonal codes are used at time-frequency resource positions on different symbols corresponding to a same subcarrier). The orthogonal code may be one of the code resources in the embodiments of the present invention. By way of example, and not limitation, the following Table 2 provides orthogonal codes used by different antenna ports.

Table 2

| Antenna port | $[\bar{w}_p(0)\ \bar{w}_p(1)\ \bar{w}_p(2)\ \bar{w}_p(3)]$ |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |
| 13 | [+1 -1 -1 +1] |
| 14 | [-1 +1 +1 -1] |

The configuration pattern shown in FIG. 4 may be used to transmit two or more types of reference signals. For example, the antenna ports 0 and 1 are used for CRS transmission, and the antenna ports 7 and 8 are used for DMRS transmission.

It should be noted that, the configuration pattern shown in FIG. 3 or FIG. 4 is merely for illustration purposes, and the present invention is not limited thereto. Any change can be made as required, provided that time-frequency resources corresponding to a plurality of types of reference signals (specifically, antenna ports used by the plurality of types of reference signals) can be indicated by a same configuration pattern.

For example, in an implementation, the configuration pattern may indicate only a time-frequency resource corresponding to each antenna port, instead of indicating a type of a reference signal corresponding to each antenna port. In addition, in the embodiments of the present invention, two or more antenna ports may multiplex a same time-frequency resource based on different code resources.

It should be noted that, a source of the time-frequency resource used to transmit a reference signal (or a time-frequency resource indicated by the configuration pattern) is described above with reference to the "system time-frequency resource". In the embodiments of the present invention, the "system time-frequency resource" may be one or more time-frequency resources that are specified in a communications system (such as the foregoing communications system 100) or a communication protocol, that are in the communications system, and that are used when a network device performs wireless communication with a terminal device.

In the embodiments of the present invention, the system time-frequency resource may have the following structure.

To be specific, from a perspective of a time dimension, a time length of one radio frame is 10 ms, a time length of one subframe is 1 ms, and one radio frame includes 10 subframes. Specifically, there are two subframe formats: One is a normal cyclic prefix (Normal Cyclic Prefix, NCP) subframe format, where one NCP subframe includes 14 OFDM symbols or two timeslots, the OFDM symbols are numbered from 0 to 13, the OFDM symbols numbered from 0 to 6 are odd-numbered timeslots, and the OFDM symbols numbered from 7 to 13 are even-numbered timeslots. The other is an extended cyclic prefix (Extended Cyclic Prefix, ECP) subframe format, where one ECP subframe includes 12 OFDM symbols or two timeslots, the OFDM symbols are numbered from 0 to 11, the OFDM symbols numbered from 0 to 5 are odd-numbered timeslots, and the OFDM symbols numbered from 6 to 11 are even-numbered timeslots. From a perspective of a frequency dimension, a minimum unit is a subcarrier. From a perspective of a combination of two dimensions: a time and a frequency, for a resource used for transmission by an antenna port, a minimum unit is a resource element (Resource Element, RE). One RE includes one OFDM symbol in time domain, and includes one subcarrier in frequency domain. A resource element group (Resource-Element Group, REG) may include an integer quantity of REs. For example, one REG may include four or 16 REs. One physical resource block (Physical Resource Block, PRB) includes one timeslot in time domain, and includes 12 subcarriers in frequency domain. One subframe includes one PRB pair (PRB pair). One resource block (Resource Block, RB) includes one subframe in time domain, and includes 12 subcarriers in frequency domain. A resource block group (Resource Block Group, RBG) may include an integer quantity of PRBs. For example, one RBG may include one PRB, two PRBs, three PRBs, four PRBs, or another integer quantity of PRBs.

The system time-frequency resource may alternatively have another structure. This is not limited in the present invention.

In the embodiments of the present invention, the system time-frequency resource may be a licensed time-frequency resource or an unlicensed time-frequency resource. Alternatively, in the embodiments of the present invention, a sending device and a receiving device may use a system time-frequency resource based on a grant free transmission solution, or may use a system time-frequency resource grant-based manner. This is not particularly limited in the present invention.

An unlicensed time-frequency resource is a resource that does not need to be allocated by a system, that can be shared by communications devices, and that is included in unlicensed time-frequency domain. Resource sharing in an unlicensed band means that only indexes such as transmit power and out-of-band leakage are specified for use of a particular spectrum, to ensure that a plurality of devices sharing the frequency band meet a basic coexistence requirement. An operator can implement network capacity offloading by using an unlicensed band resource. However, regulatory requirements on an unlicensed band resource in different regions and different spectrums need to be complied with. These requirements are generally formulated to protect a radar or another common system, and ensure that a plurality of systems do not impose harmful impact to each other as far as possible and fairly coexist, and include a transmit power limitation, an out-of-band leakage index, and indoor and outdoor use limitations, and there are some additional coexistence policies and the like in some regions. For example, the communications devices can use time-frequency resources through contention or interception, for example, a manner specified in listen before talk (LBT, Listen Before Talk).

To support a large quantity of MTC services in a future network, and to implement service transmission of a low delay and high reliability, this patent provides a solution of grant free transmission. The grant free transmission may be represented in English as Grant Free. The grant free transmission herein may be uplink data transmission. The grant free transmission may be understood as any one of or more of the following meanings, or a combination of some technical features of a plurality of meanings, or another similar meaning.

The grant free transmission may mean that a network device pre-allocates a plurality of transmission resources and notifies a terminal device of the plurality of transmission resources; when the terminal device needs to transmit uplink data, the terminal device selects at least one transmission resource from the plurality of transmission resources pre-allocated by the network device, and sends the uplink data by using the selected transmission resource; and the network device detects, on one or more of the plurality of pre-allocated transmission resources, the uplink data sent by the terminal device. The detection may be blind detection, or detection performed according to a control domain in the uplink data, or detection performed in another manner.

The grant free transmission may mean that a network device pre-allocates a plurality of transmission resources and notifies a terminal device of the plurality of transmission resources, so that when the terminal device needs to transmit uplink data, the terminal device selects at least one transmission resource from the plurality of transmission resources pre-allocated by the network device, and sends the uplink data by using the selected transmission resource.

The grant free transmission may mean that information about a plurality of pre-allocated transmission resources is obtained; and when uplink data needs to be transmitted, at least one transmission resource is selected from the plurality of transmission resources, and the uplink data is sent by using the selected transmission resource. The information may be obtained from the network device.

The grant free transmission may refer to a method for implementing uplink data transmission by a terminal device without dynamic scheduling by a network device. The dynamic scheduling may be a scheduling manner in which the network device indicates a transmission resource to the terminal device by using signaling each time the terminal device transmits uplink data. Optionally, implementation of uplink data transmission by a terminal device may be understood as a case in which uplink data transmission is allowed to be performed on data of two or more terminal devices on a same time-frequency resource. Optionally, the transmission resource may be a transmission resource of one or more transmission time units after a moment at which UE receives the signaling. One transmission time unit may be a minimum time unit of one transmission. For example, a value of a transmission time interval (English full name: Transmission Time Interval, TTI for short) may be 1 ms, or may be a preset transmission time unit.

The grant free transmission may mean that a terminal device transmits uplink data without a grant of a network device. The grant may mean that the terminal device sends an uplink scheduling request to the network device, and after receiving the scheduling request, the network device sends an uplink grant to the terminal device. The uplink grant indicates an uplink transmission resource allocated to the terminal device.

The grant free transmission may be a contention transmission mode, and specifically, may mean that a plurality of terminals simultaneously transmit uplink data on a same pre-allocated time-frequency resource without a grant of a base station.

The data may include service data or signaling data.

The blind detection may be understood as detection performed, when whether any data arrives is unknown in advance, on data that may arrive. The blind detection may also be understood as detection performed without an explicit signaling indication.

By way of example, and not limitation, in the embodiments of the present invention, the unlicensed spectrum resource may include an approximately 900-MHz frequency band near 5 GHz and an approximately 90-MHz frequency band near a 2.4-GHz frequency band.

In addition, in the embodiments of the present invention, a terminal device and a network device may perform wireless communication by using a licensed spectrum resource. To be specific, the communications system 100 in the embodiments of the present invention is a communications system that can use a licensed band.

A licensed time-frequency resource is usually a time-frequency resource that can be used only after being approved by a national or local wireless communications committee. Different systems such as an LTE system and a Wi-Fi system, or systems included by different operators cannot share a licensed time-frequency resource.

In addition, in some embodiments of the present invention, a network device can provide one or more unlicensed cells (which may also be referred to as unlicensed carriers) and one or more licensed cells (which may also be referred to as licensed carriers).

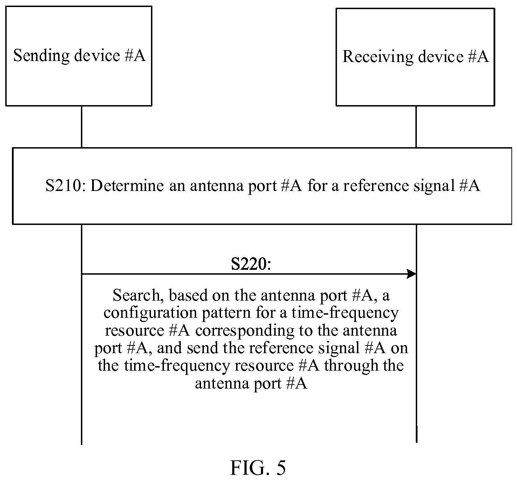

A method for sending and receiving a reference signal in an embodiment of the present invention is described in detail below with reference to FIG. 5.

It should be noted that, in this embodiment of the present invention, a sending device (such as a first sending device) may be a network device (such as an access network device) or a terminal device. This is not particularly limited in the present invention. When the sending device is a network device, the sending device can perform an action performed by a network device in the following descriptions. When the sending device is a terminal device, the sending device can perform an action performed by a terminal device in the following descriptions.

Similarly, a receiving device (such as a first receiving device) may be a network device (such as an access network device) or a terminal device. This is not particularly limited in the present invention. When the receiving device is a network device, the receiving device can perform an action performed by a network device in the following descriptions. When the receiving device is a terminal device, the receiving device can perform an action performed by a terminal device in the following descriptions.

FIG. 5 is a schematic interaction diagram of a method 200 for sending and receiving a reference signal according to an embodiment of the present invention. As shown in FIG. 5, in S210, a sending device #A (namely, an example of the first sending device) generates a reference signal #A (namely, an example of a first reference signal). A process of generating the reference signal #A may be similar to that in the prior art. Herein, to avoid repeated descriptions, detailed descriptions thereof are omitted.

It should be noted that, in this embodiment of the present invention, the reference signal #A is a reference signal of a type #A (namely, an example of a first type). Herein, the type #A may be determined based on any one of the foregoing signal parameters A to F. This is not particularly limited in the present invention.

It should further be noted that, a function of the reference signal #A may include one or more of the functions shown by B1 to B11 above. For example, the reference signal #A may be used for time-frequency synchronization and data channel demodulation.

Subsequently, the sending device #A may determine an antenna port for the reference signal #A. For ease of understanding and distinguishing, the antenna port is denoted as an antenna port #A below. It should be noted that, the antenna port #A is merely used to correspond to the reference signal #A, and a quantity of antenna ports is not limited, to be specific, the antenna port #A may indicate one or more antenna ports.

By way of example, and not limitation, in this embodiment of the present invention, an antenna port of a reference signal may be determined by a network device and delivered, by using RRC signaling or MAC signaling or physical layer signaling, or in another manner, to a terminal device. Therefore, when the sending device #A is a network device, the sending device #A may voluntarily determine the antenna port #A. When the sending device #A is a terminal device, the sending device #A may determine the antenna port #A according to an indication of a network device accessed by the sending device #A.

It should be noted that, the antenna port #A is an antenna port that can be supported by the sending device #A.

The antenna port for the first reference signal is determined in all antenna ports supported by the sending device.

For example, a configuration pattern may be used to indicate eight antenna ports, and the sending device #A can support only a maximum of four antenna ports, so that the antenna port #A can only be a maximum of four of the eight antenna ports indicated by the configuration pattern. The antenna port for the first reference signal is determined in the four antenna ports supported by the sending device.

Specifically, in this embodiment of the present invention, the sending device can support a plurality of antenna ports, and specifically, can support sending of a signal (such as a reference signal) through each of the plurality of antenna ports.

In the prior art, each type of reference signal can be sent only through an antenna port corresponding to the type of reference signal. Using downlink transmission as an example, a CRS can be sent only on antenna ports 0, 1,2, and 3, and a DMRS can be sent only on antenna ports 7 to 14.

In comparison, in this embodiment of the present invention, each type of reference signal can be sent through any one of all the antenna ports supported by the sending device.

To be specific, in this embodiment of the present invention, the antenna port indicated by the configuration pattern may not be bound with a type of a reference signal, or each type of reference signal can be sent through any one of the antenna ports indicated by the configuration pattern.

By way of example, and not limitation, for example, assuming that the configuration pattern is used to indicate a time-frequency resource corresponding to each of eight antenna ports with antenna port numbers being a to h, the sending device #A can support all the antenna ports indicated by the configuration pattern. The sending device #A may send the reference signal #A within a period of time through the antenna ports a and b, and send the reference signal #A within another period of time through the antenna ports e and f.

Further, if the sending device #A is a network device, the sending device #A may notify the receiving device of an antenna port number used by the reference signal #A, and/or a quantity of antenna ports by using RRC signaling or MAC signaling or physical layer signaling, or in another manner.

If the sending device #A is a terminal device, the sending device #A may determine an antenna port number used by the reference signal #A and/or a quantity of antenna ports by receiving RRC signaling or MAC signaling or physical layer signaling, or in another manner. The antenna port number used by the reference signal #A and/or the quantity of antenna ports are/is determined and notified to the terminal device by a network device. It should be noted that, the terminal device needs to report a maximum antenna port quantity or a maximum layer quantity supported by the device to the network device in advance, so that the network device can determine an antenna port that can be supported by the terminal device or the quantity of antenna ports.

In addition, in S210, a receiving device (namely, an example of the first receiving device; for ease of understanding and description, referred to as a receiving device #A below) of the reference signal #A may determine the antenna port #A, and a process of determining the antenna port #A by the receiving device #A may be similar to a process of determining the antenna port #A by the sending device #A. To be specific, when the receiving device #A is a network device, the receiving device #A may voluntarily determine the antenna port #A. When the receiving device #A is a terminal device, the receiving device #A may determine the antenna port #A according to an indication of a network device accessed by the receiving device #A.

In S220, the sending device #A may search a configuration pattern based on the antenna port #A, to determine a time-frequency resource (namely, an example of a first time-frequency resource; for ease of understanding and description, denoted as a time-frequency resource #A below) corresponding to the antenna port #A, map the reference signal #A to the time-frequency resource #A, and send the reference signal #A through the antenna port #A.

It should be noted that, as described above, a system time-frequency resource (or a time-frequency resource indicated by the configuration pattern) may be divided into a plurality of basic time-frequency resource elements (such as RBs). The time-frequency resource #A may be located on all the basic time-frequency resource elements of the system time-frequency resource, or may be located in some of the basic time-frequency resource elements of the system time-frequency resource. For example, the time-frequency resource #A is located on one or more of the RBs of the system time-frequency resource. This is not particularly limited in the present invention.

In addition, in this embodiment of the present invention, in addition to the reference signal #A, one or more other reference signals (such as a reference signal #B and/or a reference signal #C in the following descriptions) are carried on all or a part (for example, all or some REs) of the time-frequency resource #A. For ease of understanding and distinguishing, some or all time-frequency resources carrying at least two types of reference signals in the time-frequency resource #A are denoted as a time-frequency resource #A1 below.

In this case, the reference signal #A and the one or more other reference signals may multiplex the time-frequency resource #A1 through, for example, code division multiplexing.

Therefore, in this embodiment of the present invention, the sending device #A may determine a code resource (for example, a CDM code; for ease of understanding and distinguishing, denoted as a code resource #A below) corresponding to the reference signal #A. The "code resource corresponding to the reference signal #A" may be understood as that the reference signal #A is multiplexed on the time-frequency resource #A1 based on the code resource #A.

By way of example, and not limitation, in this embodiment of the present invention, a length of a code resource may be determined based on a quantity of reference signals multiplexed on a same time-frequency resource. For example, if the length of the code resource is 4, multiplexing of four reference signals on the same time-frequency resource can be supported. If the length of the code resource is 8, multiplexing of eight reference signals on the same time-frequency resource can be supported.

In addition, in this embodiment of the present invention, a code resource corresponding to each reference signal may be determined and notified to a terminal device (which may serve as a sending device or a receiving device of the reference signal) by a network device (which may serve as a sending device or a receiving device of the reference signal).

For another example, in this embodiment of the present invention, a code resource corresponding to each type of reference signal may be specified in a communications system or a communication protocol. Therefore, a code resource corresponding to an actually sent reference signal can be determined based on a type of the reference signal.

It should be understood that, the method for determining a code resource illustrated above is merely for illustration purposes, and the present invention is not limited thereto. The method for determining a code resource in this embodiment of the present invention may also be similar to that in the prior art. Herein, to avoid repeated descriptions, detailed descriptions thereof are omitted.

The code resource #A is orthogonal to a code resource (such as a CDM code) corresponding to another reference signal (such as the reference signal #B and/or the reference signal #C in the following descriptions) carried on the time-frequency resource #A1. Therefore, the sending device #A may further multiplex the reference signal #A on the time-frequency resource #A1 based on the code resource #A.

In addition, in S220, the receiving device #A may search the configuration pattern based on the antenna port #A, to determine the time-frequency resource #A corresponding to the antenna port #A, and receive the reference signal #A by using the time-frequency resource #A. In addition, a process of determining the time-frequency resource #A by the receiving device #A may be similar to a process of determining the time-frequency resource #A by the sending device #A. Herein, to avoid repeated descriptions, detailed descriptions thereof are omitted.

In addition, the receiving device #A may determine the code resource #A, and obtain the reference signal #A from the time-frequency resource #A1 based on the code resource #A. In addition, a process of determining the code resource #A by the receiving device #A may be similar to a process of determining the code resource #A by the sending device #A. Herein, to avoid repeated descriptions, detailed descriptions thereof are omitted.

It should be noted that, if the code resource #A is used on the time-frequency resource #A1, the same code resource #A may also be used on a time-frequency resource other than the time-frequency resource #A1 in the time-frequency resource #A.

Optionally, in this embodiment of the present invention, whether to add precoding information to the reference signal #A may be determined based on a case of the receiving device (for example, a quantity of receiving devices) of the reference signal #A.

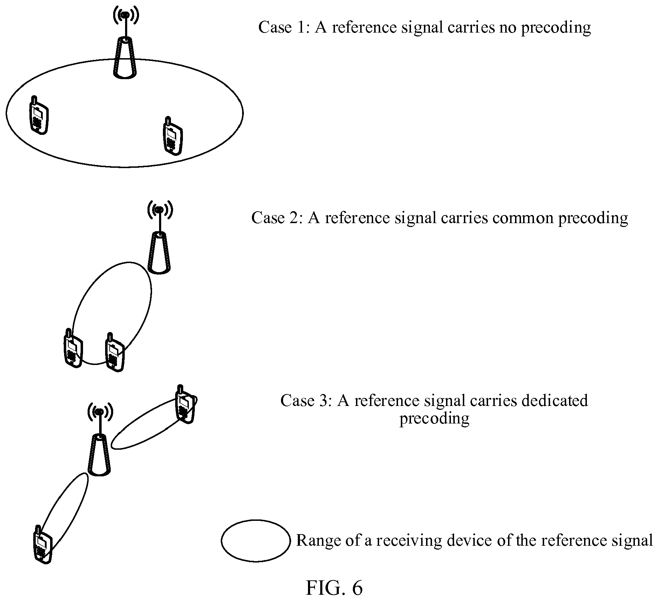

FIG. 6 shows an example of a case of a receiving device of a reference signal according to an embodiment of the present invention.

As shown in Case 1 in FIG. 6, for example, the reference signal #A may be sent to all terminal devices in a cell provided by a network device. In this case, precoding information does not need to be added to the reference signal #A.

As shown in Case 2 in FIG. 6, the reference signal #A may be sent to a receiving device group including two or more receiving devices. In this case, the reference signal #A may be used as a common reference signal of the receiving device group. In this case, common precoding information for the receiving device group may be added to the reference signal #A.

As shown in Case 3 in FIG. 6, the reference signal #A may be sent to one receiving device. In this case, the reference signal #A carries dedicated precoding information for the receiving device through beamforming.

To be specific, in conclusion, in this embodiment of the present invention, the reference signal #A may not carry precoding information, or the reference signal #A may carry common precoding information, or the reference signal #A may carry dedicated precoding information.

Optionally, at least one of the plurality of antenna ports is further used to send a second reference signal; the second reference signal is at least one of the at least two types of reference signals; a type of the first reference signal is different from a type of the second reference signal; the second reference signal is carried on a second time-frequency resource; and the second time-frequency resource is a time-frequency resource corresponding to the antenna port for the second reference signal and indicated by the configuration pattern.

Specifically, in this embodiment of the present invention, the reference signal #B (namely, an example of the second reference signal) transmitted based on the configuration pattern may further exist in the communications system.

It should be noted that, in this embodiment of the present invention, the reference signal #B is a reference signal of a type #B (namely, an example of a second type). Herein, the type #B may be determined based on any one of the foregoing signal parameters A to F. This is not particularly limited in the present invention. In addition, the type #B is different from the type #A.

It should further be noted that, a function of the reference signal #B may include one or more of the functions shown by B1 to B11 above. For example, the reference signal #B may be used for time-frequency synchronization and control channel demodulation.

Optionally, that a type of the first reference signal is different from a type of the second reference signal may be that at least one function of the first reference signal is different from the function of the second reference signal. For example, the first reference signal may be used for time-frequency synchronization and data channel demodulation, and the second reference signal may be used for time-frequency synchronization and control channel demodulation, so that it may also be considered that the type of the first reference signal is different from the type of the second reference signal.

Optionally, that a type of the first reference signal is different from a type of the second reference signal includes:

the first reference signal is used for data channel demodulation, and the second reference signal is used for control channel demodulation; or

the first reference signal is used for channel measurement, and the second reference signal is used for control channel demodulation; or

the first reference signal is used for data channel demodulation, and the second reference signal is used for channel measurement.

Specifically, by way of example, and not limitation, in this embodiment of the present invention, that "the type #B is different from the type #A" may mean that the function of the reference signal #A is different from the function of the reference signal #B.

For example, the reference signal #A is used for data channel demodulation, and the reference signal #B is used for control channel demodulation.

For another example, the reference signal #A is used for channel measurement, and the reference signal #B is used for control channel demodulation.

For another example, the reference signal #A is used for data channel demodulation, and the reference signal #B is used for channel measurement.

It should be understood that, the meaning of the type #B being different from the type #A illustrated above is merely for illustration purposes. This is not particularly limited in the present invention, provided that a signal parameter of the reference signal #A is different from a signal parameter of the reference signal #B.

Methods and processes of transmitting the reference signal #B by a sending device (namely, an example of a second sending device; for ease of understanding and description, denoted as a sending device #B below) of the reference signal #B and a receiving device (for ease of understanding and description, denoted as a receiving device #B below) of the reference signal #B may be similar to methods and processes of transmitting the reference signal #A by the sending device #A and the receiving device #A. Herein, to avoid repeated descriptions, detailed descriptions thereof are omitted.

An antenna port corresponding to the reference signal #B is denoted as an antenna port #B. Similar to the antenna port #A, the antenna port #B is merely used to correspond to the reference signal #B, and a quantity of antenna ports is not limited. To be specific, the antenna port #B may indicate one or more antenna ports.

A time-frequency resource corresponding to the reference signal #B is denoted as a time-frequency resource #B. Therefore, in this embodiment of the present invention, the time-frequency resource #B and the time-frequency resource #A may have the following relationships.

Relationship 1. The time-frequency resource #B is completely different from the time-frequency resource #A.

Relationship 2. The time-frequency resource #B is completely the same as the time-frequency resource #A, namely, an example of "the second time-frequency resource including a part or all of the first time-frequency resource".

Relationship 3. The time-frequency resource #B is partially the same as the time-frequency resource #A, namely, another example of "the second time-frequency resource including a part or all of the first time-frequency resource".

Therefore, for Relationship 2 and Relationship 3, both the reference signal #A and the reference signal #B are carried on a same part (namely, the time-frequency resource #A1) of the time-frequency resource #B and the time-frequency resource #A.

In this case, the sending device #B and the receiving device #B may determine a code resource (such as a CDM code; for ease of understanding and distinguishing, denoted as a code resource #B below) corresponding to the reference signal #B. The "code resource corresponding to the reference signal #B" may be understood as that the reference signal #B is multiplexed on the time-frequency resource #A1 based on the code resource #B.

It should be noted that, in this embodiment of the present invention, the code resource #B may be orthogonal to the code resource #A.

Herein, methods and processes of determining the code resource #B by the sending device #B and the receiving device #B may be similar to methods and processes of determining the code resource #A by the sending device #A and the receiving device #A. Herein, to avoid repeated descriptions, detailed descriptions thereof are omitted.

Optionally, the first reference signal is sent to the first receiving device, and the second reference signal is sent to a second receiving device.

To be specific, in this embodiment of the present invention, the reference signal #B and the reference signal #A are reference signals sent to different receiving devices.

For example, the "different receiving devices" may mean that one receiving device is a terminal device, and the other receiving device is a different terminal device.

Alternatively, the "different receiving devices" may mean that one receiving device is a network device, and the other receiving device is a different network device.

Alternatively, the "different receiving devices" may mean that one receiving device is a network device, and the receiving device is a terminal device.

It should be understood that, the cases of the receiving devices of the first reference signal and the second reference signal illustrated above are merely for illustration purposes, and the present invention is not limited thereto. For example, the receiving devices of the first reference signal and the second reference signal may also be the same.

Optionally, the second reference signal is sent by the first sending device. To be specific, the sending device #A and the sending device #B are a same sending device.

In this case, the receiving device of the reference signal #B may be different from the receiving device of the reference signal #A.

For example, the first sending device is a first network device, the first receiving device is a terminal device, and the second receiving device is a second network device.

Specifically, in this embodiment of the present invention, the sending device #A may serve as a sending device of both the reference signal #B and the reference signal #A. In this case, for example, the sending device #A may be a network device (namely, the first network device).

By way of example, and not limitation, for example, assuming that the configuration pattern is used to indicate the time-frequency resource corresponding to each of the eight antenna ports with the antenna port numbers being a to h, the first network device can support all the antenna ports indicated by the configuration pattern. The first network device may send the reference signal #A through the antenna ports a and b and send the reference signal #B through the antenna ports c and d within a period of time; and send the reference signal #B through the antenna ports a and b and send the reference signal #A through the antenna ports c and d within another period of time.

Further, the first network device may separately notify the receiving device of an antenna port number used by the reference signal #A and an antenna port number used by the reference signal #B, and/or quantities of antenna ports by using RRC signaling or MAC signaling or physical layer signaling, or in another manner.

In addition, for example, the receiving device of the reference signal #A may be a terminal device. To be specific, a communications link corresponding to the reference signal #A may be a cellular link.

For another example, the receiving device of the reference signal #B may be a network device (namely, an example of the second network device). To be specific, a communications link corresponding to the reference signal #B may be a backhaul link.

It should be understood that, the cases of the sending devices and the receiving devices of the reference signal #A and the reference signal #B illustrated above are merely for illustration purposes. This is not particularly limited in the present invention. To be specific, the sending devices of the reference signal #A and the reference signal #B may be the same or different, and the receiving devices of the reference signal #A and the reference signal #B may be the same or different. This is not particularly limited in the present invention, provided that it is ensured that the type of the reference signal #A is different from that of the reference signal #B (to be specific, at least one signal parameter is different).

In addition, in this embodiment of the present invention, the reference signal #B may alternatively be sent by the sending device #B (a sending device different from the sending device #A). In addition, in this case, the sending device #B (namely, an example of the second sending device) generates the reference signal #B (namely, an example of the second reference signal). A process of generating the reference signal #B may be similar to that in the prior art. Herein, to avoid repeated descriptions, detailed descriptions thereof are omitted. In addition, the sending device #B may determine the code resource #B (namely, an example of a second code resource) corresponding to the reference signal #B.

In conclusion, in this embodiment of the present invention, the sending devices and the receiving devices of the reference signal #A and the reference signal #B may include the following cases:

Case 1

The sending devices of the reference signal #A and the reference signal #B are the same, and the receiving devices of the reference signal #A and the reference signal #B are also the same. In this case, the function (namely, at least one signal parameter) of the reference signal #A is different from that of the reference signal #B.

Case 2

The sending devices of the reference signal #A and the reference signal #B are the same, and the receiving devices of the reference signal #A and the reference signal #B are different. In this case, the function (namely, at least one signal parameter) of the reference signal #A may be the same as or different from that of the reference signal #B.

By way of example, and not limitation, in this case, for example, the sending devices of the reference signal #A and the reference signal #B may be a network device, the receiving device of the reference signal #A may be a terminal device, and the receiving device of the reference signal #B may be a network device.

Case 3

The sending devices of the reference signal #A and the reference signal #B are different, and the receiving devices of the reference signal #A and the reference signal #B are the same. In this case, the function (namely, at least one signal parameter) of the reference signal #A may be the same as or different from that of the reference signal #B.

Case 4

The sending devices of the reference signal #A and the reference signal #B are different, and the receiving devices of the reference signal #A and the reference signal #B are also different. In this case, the function (namely, at least one signal parameter) of the reference signal #A may be the same as or different from that of the reference signal #B.

To be specific, in Case 4, the reference signal #A and the reference signal #B may be reference signals transmitted in different cells.

By way of example, and not limitation, in this case, for example, the sending device of the reference signal #A may be a terminal device, the receiving device of the reference signal #A may be a network device, the sending device of the reference signal #B may be a network device, and the receiving device of the reference signal #B may be a terminal device. To be specific, the reference signal #A may be an uplink reference signal in a cell, and the reference signal #B may be a downlink reference signal in another cell.

It should be noted that, the case in which the code resource #A is orthogonal to the code resource #B illustrated above is merely for illustration purposes, and the present invention is not limited thereto, provided that it is ensured that the code resource #A is different from the code resource #B, and the reference signal #A and the reference signal #B can be multiplexed on a same time-frequency resource based on the code resource #A and the code resource #B.

In addition, in this embodiment of the present invention, a code length of the code resource #A may be the same as or different from a code length of the code resource #B. This is not particularly limited in the present invention.

In addition, in this embodiment of the present invention, the sending device of the reference signal #A may be a network device or a terminal device, and the receiving device of the reference signal #A may be a network device or a terminal device. Similarly, the sending device of the reference signal #B may be a network device or a terminal device, and the receiving device of the reference signal #B may be a network device or a terminal device. This is not particularly limited in the present invention.

In this embodiment of the present invention, there may be one receiving device #A, or there may be a plurality of receiving devices #A (namely, a receiving device group). This is not particularly limited in the present invention.

In addition, in this embodiment of the present invention, there may be one receiving device #B, or there may be a plurality of receiving devices #B (namely, a receiving device group). This is not particularly limited in the present invention.

To be specific, in this embodiment of the present invention, there may be the following cases based on a quantity of receiving devices:

Case X. The first reference signal is sent to one receiving device (to be specific, there is one receiving device #A), and the second reference signal is sent to a receiving device group including a plurality of receiving devices (to be specific, there are a plurality of receiving devices #B). It should be noted that, in this case, the receiving device #A may belong to the plurality of receiving devices #B, or the receiving device #A may not belong to the plurality of receiving devices #B. This is not particularly limited in the present invention.

Case Y. The first reference signal is sent to a receiving device group including a plurality of receiving devices (to be specific, there are a plurality of receiving devices #A), and the second reference signal is sent to one receiving device (to be specific, there is one receiving device #B). It should be noted that, in this case, the receiving device #B may belong to the plurality of receiving devices #A, or the receiving device #B may not belong to the plurality of receiving devices #A. This is not particularly limited in the present invention.

Case Z. The first reference signal is sent to a receiving device group including a plurality of receiving devices (to be specific, there are a plurality of receiving devices #A), and the second reference signal is sent to a receiving device group including a plurality of receiving devices (to be specific, there are a plurality of receiving devices #B). It should be noted that, in this case, the plurality of receiving devices #B may be completely the same as the plurality of receiving devices #A, or the plurality of receiving devices #B may be completely different from the plurality of receiving devices #A, or the plurality of receiving devices #B may be partially the same as the plurality of receiving devices #A. This is not particularly limited in the present invention.

Case W. The first reference signal is sent to one receiving device (to be specific, there is one receiving device #A), and the second reference signal is sent to one receiving device (to be specific, there is one receiving device #B). It should be noted that, in this case, the receiving device #B may be different from the receiving device #A, or the receiving device #B may be the same as the receiving device #A. This is not particularly limited in the present invention.

The "code resource corresponding to the reference signal #B" may be understood as that the reference signal #B is multiplexed on the time-frequency resource based on the code resource #B.

Therefore, the reference signal #A and the reference signal #B may be multiplexed on a same time-frequency resource by using the code resource #A and the code domain resource #B.

It should be noted that, in this embodiment of the present invention, the reference signal #B is a reference signal of the type #B (namely, an example of the second type). Herein, the type #B may be determined based on any one of the foregoing signal parameters A to F. This is not particularly limited in the present invention.

To be specific, in this embodiment of the present invention, the reference signal #B (namely, an example of a second-type reference signal) and the reference signal #A (namely, an example of a first-type reference signal) are different types of reference signals.

Similar to the reference signal #A, based on different cases of the receiving device (for example, a quantity of receiving devices) of the reference signal #B, the reference signal #B may not carry precoding information, or the reference signal #B may carry common precoding information, or the reference signal #B may carry dedicated precoding information.

To be specific, in this embodiment of the present invention, there is the following case: The reference signal #A carries precoding information (including common precoding information or dedicated precoding information), and the reference signal #B carries no precoding information.

Optionally, at least one of the plurality of antenna ports is further used to send a third reference signal; the third reference signal is at least one of the at least two types of reference signals; a type of the third reference signal is different from the type of the first reference signal, and the type of the third reference signal is different from the type of the second reference signal; the third reference signal is carried on a third time-frequency resource; and the third time-frequency resource is a time-frequency resource corresponding to the antenna port for the third reference signal and indicated by the configuration pattern.

Specifically, in this embodiment of the present invention, a reference signal #C (namely, an example of the third reference signal) transmitted based on the configuration pattern may further exist in the communications system.

It should be noted that, in this embodiment of the present invention, the reference signal #C is a reference signal of a type #C (namely, an example of a third type). Herein, the type #C may be determined based on any one of the foregoing signal parameters A to F. This is not particularly limited in the present invention. In addition, the type #C is different from the type #A, and the type #C is different from the type #B.

It should further be noted that, a function of the reference signal #C may include one or more of the functions shown by B1 to B11 above. For example, the reference signal #C may be used for channel state information measurement.

Optionally, that a type of the third reference signal is different from the type of the first reference signal, and the type of the third reference signal is different from the type of the second reference signal may be that at least one function of the third reference signal is different from the function of the first reference signal, and at least one function of the third reference signal is different from the function of the second reference signal. For example, the first reference signal may be used for time-frequency synchronization and data channel demodulation, the second reference signal may be used for time-frequency synchronization and control channel demodulation, and the second reference signal may be used for channel state information measurement and control channel demodulation, so that it may also be considered that the type of the third reference signal is different from the type of the first reference signal, and the type of the third reference signal is different from the type of the second reference signal.

Optionally, that a type of the third reference signal is different from the type of the first reference signal, and the type of the third reference signal is different from the type of the second reference signal includes:
the first reference signal is used for data channel demodulation, the second reference signal is used for control channel demodulation, and the third reference signal is used for channel measurement.

Specifically, by way of example, and not limitation, in this embodiment of the present invention, that "the type #B is different from the type #A, and the type #C is different from the type #B" may mean that the function of the reference signal #C is different from the function of the reference signal #A, and the function of the reference signal #C is different from the function of the reference signal #B.

For example, the reference signal #A is used for data channel demodulation, the reference signal #B is used for control channel demodulation, and the reference signal #C is used for channel measurement.

It should be understood that, the meaning of the type #B being different from the type #A, and the type #C being different from the type #B illustrated above is merely for illustration purposes. This is not particularly limited in the present invention, provided that a signal parameter of the reference signal #C is different from a signal parameter of the reference signal #A, and the signal parameter of the reference signal #C is different from a signal parameter of the reference signal #B.

Methods and processes of transmitting the reference signal #C by a sending device (namely, an example of a third sending device; for ease of understanding and description, denoted as a sending device #C below) of the reference signal #C and a receiving device (for ease of understanding and description, denoted as a receiving device #C below) of the reference signal #C may be similar to the methods and the processes of transmitting the reference signal #A by the sending device #A and the receiving device #A. Herein, to avoid repeated descriptions, detailed descriptions thereof are omitted.

A time-frequency resource corresponding to the reference signal #C is denoted as a time-frequency resource #C. Therefore, in this embodiment of the present invention, the time-frequency resource #C and the time-frequency resource #A and the time-frequency resource #B may have the following relationships.

Relationship 4. The time-frequency resource #C is completely different from the time-frequency resource #A.

Relationship 5. The time-frequency resource #C is completely the same as the time-frequency resource #A, namely, an example of "the third time-frequency resource including a part or all of the first time-frequency resource".

Relationship 6. The time-frequency resource #C is partially the same as the time-frequency resource #A, namely, another example of "the third time-frequency resource including a part or all of the first time-frequency resource".

Relationship 7. The time-frequency resource #C is completely different from the time-frequency resource #B.

Relationship 8. The time-frequency resource #C is completely the same as the time-frequency resource #B, namely, an example of "the third time-frequency resource including a part or all of the second time-frequency resource".

Relationship 9. The time-frequency resource #C is partially the same as the time-frequency resource #B, namely, another example of "the third time-frequency resource including a part or all of the second time-frequency resource".

Therefore, for Relationship 5 and Relationship 6, both the reference signal #A and the reference signal #C are carried on a same part (namely, the time-frequency resource #A1) of the time-frequency resource #C and the time-frequency resource #A.

Therefore, for Relationship 8 and Relationship 9, both the reference signal #B and the reference signal #C are carried on a same part of the time-frequency resource #C and the time-frequency resource #B.

In addition, all of the reference signal #A, the reference signal #B, and the reference signal #C may be carried on a same part (namely, the time-frequency resource #A1) of the time-frequency resource #C, the time-frequency resource #B, and the time-frequency resource #A.

In this case, the sending device #C and the receiving device #C may determine a code resource (such as a CDM code; for ease of understanding and distinguishing, denoted as a code resource #C below) corresponding to the reference signal #C. The "code resource corresponding to the reference signal #C" may be understood as that the reference signal #C is multiplexed on the time-frequency resource #A1 based on the code resource #C.

It should be noted that, in this embodiment of the present invention, the code resource #C may be orthogonal to the code resource #A.

Alternatively, the code resource #C may be orthogonal to the code resource #B.

Alternatively, the code resource #C may be orthogonal to both the code resource #A and the code resource #B.

Herein, methods and processes of determining the code resource #C by the sending device #C and the receiving device #C may be similar to the methods and the processes of determining the code resource #A by the sending device #A and the receiving device #A. Herein, to avoid repeated descriptions, detailed descriptions thereof are omitted.

Optionally, the first reference signal is sent to the first receiving device, the second reference signal is sent to the second receiving device, and the third reference signal is sent to a third receiving device.

To be specific, in this embodiment of the present invention, the reference signal #C and the reference signal #A are reference signals sent to different receiving devices.

Alternatively, the reference signal #C and the reference signal #B are reference signals sent to different receiving devices.

Alternatively, the reference signal #C, the reference signal #A, and the reference signal #B are reference signals sent to different receiving devices.

It should be understood that, the cases of the receiving devices of the third reference signal illustrated above are merely for illustration purposes, and the present invention is not limited thereto. For example, the receiving devices of the first reference signal, the second reference signal, and the third reference signal may also be the same.

Optionally, the third reference signal is sent by the first sending device. To be specific, the sending device #A and the sending device #C are a same sending device.

Alternatively, the third reference signal is sent by the second sending device. To be specific, the sending device #C and the sending device #B are a same sending device.

Alternatively, the third reference signal is sent by the third sending device. To be specific, the sending device #A and the sending device #C are different sending devices, and the sending device #B and the sending device #C are different sending devices.

It should be understood that, the cases of the sending devices and the receiving devices of the reference signal #A, the reference signal #B, and the reference signal #C illustrated above are merely for illustration purposes. This is not particularly limited in the present invention. To be specific, the sending devices of the reference signal #A, the reference signal #B, and the reference signal #C may be the same or different, and the receiving devices of the reference signal #A, the reference signal #B, and the reference signal #C may be the same or different. This is not particularly limited in the present invention, provided that it is ensured that the types of the reference signal #A, the reference signal #B, and the reference signal #C are different (to be specific, at least one signal parameter is different).

Specifically, in this embodiment of the present invention, the sending device #A may serve as a sending device of all of the reference signal #A, the reference signal #B, and the reference signal #C. In this case, for example, the sending device #A may be a network device (namely, the second network device).

By way of example, and not limitation, for example, assuming that the configuration pattern is used to indicate the time-frequency resource corresponding to each of the eight antenna ports with the antenna port numbers being a to h, the second network device can support all the antenna ports indicated by the configuration pattern. The second network device may send the reference signal #A through the antenna port a, send the reference signal #B through the antenna port b, and send the reference signal #C through the antenna ports c and d within a period of time; and send the reference signal #A through the antenna ports c and d, send the reference signal #B through the antenna port a, and send the reference signal #C through the antenna port b within another period of time.

Further, the second network device may separately notify the receiving device of an antenna port number used by the reference signal #A, an antenna port number used by the reference signal #B, and an antenna port number used by the reference signal #C, and/or quantities of antenna ports by using RRC signaling or MAC signaling or physical layer signaling, or in another manner.

In addition, in this embodiment of the present invention, the reference signal #C may alternatively be sent by the sending device #C (a sending device different from the sending device #A or the sending device #B). In addition, in this case, the sending device #C (namely, an example of the third sending device) generates the reference signal #C (namely, an example of the third reference signal). A process of generating the reference signal #C may be similar to that in the prior art. Herein, to avoid repeated descriptions, detailed descriptions thereof are omitted. In addition, the sending device #C may determine the code resource #C (namely, an example of a third code resource) corresponding to the reference signal #C.

It should be noted that, the case in which the code resource #A is orthogonal to the code resource #C illustrated above is merely for illustration purposes, and the present invention is not limited thereto, provided that it is ensured that the code resource #A is different from the code resource #C, and the reference signal #A and the reference signal #C can be multiplexed on a same time-frequency resource based on the code resource #A and the code resource #C.

In addition, in this embodiment of the present invention, the code length of the code resource #A may be the same as or different from a code length of the code resource #C. This is not particularly limited in the present invention.

In addition, in this embodiment of the present invention, the sending device of the reference signal #C may be a network device or a terminal device, and the receiving device of the reference signal #C may be a network device or a terminal device. This is not particularly limited in the present invention.

In this embodiment of the present invention, there may be one receiving device #C, or there may be a plurality of receiving devices #C (namely, a receiving device group). This is not particularly limited in the present invention.

Similar to the reference signal #A, based on different cases of the receiving device (for example, a quantity of receiving devices) of the reference signal #C, the reference signal #C may not carry precoding information, or the reference signal #C may carry common precoding information, or the reference signal #C may carry dedicated precoding information.

For a Multimedia Broadcast multicast service Single Frequency Network (Multimedia Broadcast multicast service Single Frequency Network, MBSFN) subframe, a CRS is transmitted only in a non-MBSFN area of the MBSFN subframe. The non-MBSFN area of the MBSFN subframe may be an area occupied by a PDCCH, and is usually the first one or two symbols of the subframe. For example, assuming that there are two PDCCH symbols of one MBSFN subframe, when there is one or two ports for a CRS, the CRS is transmitted only on the first symbol of the MBSFN subframe; or when there are four ports for a CRS, the CRS is transmitted only on the first two symbols of the MBSFN subframe.

When data is transmitted by using an sTTI in the MBSFN subframe, to ensure link adaptive transmission and data demodulation by an sTTI user, a downlink reference signal needs to be transmitted in the MBSFN subframe, for channel measurement and data channel demodulation by the sTTI user. It should be noted that, sTTI transmission is signal transmission within a TTI whose length is less than one subframe or 1 ms. Specifically, the length of the TTI may be one of one symbol, two symbols, three symbols, four symbols, five symbols, six symbols, and seven symbols, or the length of the TTI is a combination of at least two different TTI lengths of one symbol, two symbols, three symbols, four symbols, five symbols, six symbols, and seven symbols. For example, four TTIs are included in 1 ms, and lengths of the TTSs are respectively four symbols, three symbols, four symbols, and three symbols.

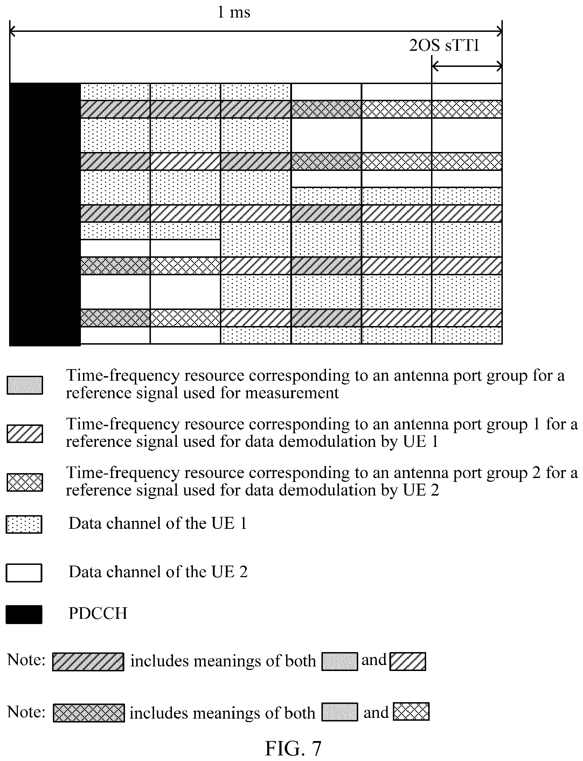

Using a two-symbol sTTI as an example, it is assumed that one subframe includes seven two-symbol sTTIs, and a PDCCH occupies the first two symbols. Within each sTTI, a base station may configure two groups of antenna ports for a reference signal, where one group is used for channel measurement by all terminal devices using the sTTI, and the other group is used for data channel demodulation by a terminal device that is scheduled to perform data transmission within the sTTI. As shown in FIG. 7, a reference signal corresponding to the port group used for channel measurement carries no precoding information. To be specific, all terminal devices (including a terminal device scheduled to perform data transmission and a terminal device not scheduled to perform data transmission) in a cell can perform channel measurement, for example, measurement of a rank, a precoding matrix, or a CQI, by using the reference signal corresponding to the port group. The port group used for data demodulation performs sending only in an area in which data is scheduled. Optionally, the port group used for data demodulation and the port group used for measurement are different port groups. Further optionally, a reference signal corresponding to the port group used for data demodulation carries UE-dedicated precoding information. It should be noted that, because data channels of UE 1 and UE 2 respectively occupy different time-frequency resources, an antenna port corresponding to a reference signal used for data channel demodulation by the UE1 and an antenna port corresponding to a reference signal used for data channel demodulation by the UE 2 may be the same, different, or partially the same.

Bandwidths corresponding to the at least two groups of antenna ports may be the same or different, but the at least two groups of antennas may overlap in time domain and/or frequency domain. For example, within the second and fifth sTTIs shown in FIG. 7, a time-frequency domain resource occupied by the reference signal corresponding to the antenna port used for measurement includes a time-frequency domain resource occupied by the reference signal corresponding to the antenna port used for data demodulation by the UE1 or the UE2.

There may be a reference signal corresponding to only one group of antenna ports within a TTI. For example, in the fourth sTTI shown in FIG. 7, there is a reference signal corresponding only to the antenna port used for data demodulation by the UE1.

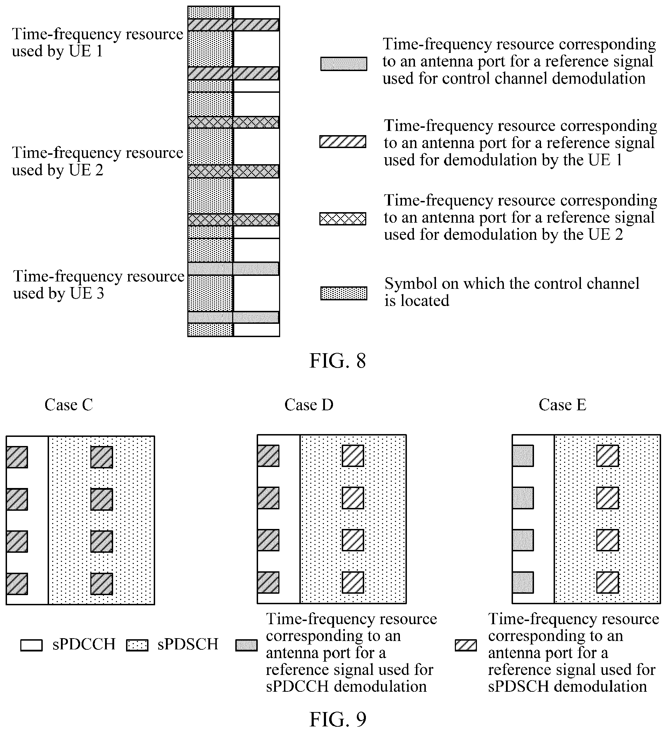

In another example, as shown in FIG. 8, a reference signal corresponding to a port group used for control channel demodulation and/or channel measurement carries no precoding information. To be specific, all terminal devices (including a terminal device scheduled to perform data transmission and a terminal device not scheduled to perform data transmission) in a cell can perform channel measurement, for example, measurement of a rank, a precoding matrix, or a CQI, by using the reference signal corresponding to the port group, and/or perform control channel detection by using the reference signal corresponding to the port group.

Because there may be a control channel within each sTTI, the reference signal corresponding to the port group used for control channel demodulation may be sent within each sTTI, or the reference signal may be sent within some sTTIs, and for another sTTI, a reference signal on a same port within a previous sTTI closest to the sTTI is used for control channel demodulation.

By way of example, and not limitation, it is assumed that a bandwidth for an sTTI includes 20 RBs, each RB includes two REGs, and one sCCE includes nine REGs. A maximum of four sCCEs can be included in the 20 RBs, and sequentially arranged virtual sCCEs are interleaved and then discretely mapped to a full bandwidth for the sTTI. Correspondingly, a reference signal corresponding to control channel demodulation within the sTTI needs to occupy the full bandwidth for the sTTI. For a terminal device that is not occupied by a control channel and that is configured to transmit a data resource, data channel demodulation also needs to be performed by using a reference signal.

FIG. 8 is a schematic diagram of multiplexing of a reference signal resource for a control channel and a data channel. As shown in FIG. 8, within a two-symbol sTTI, sCCEs on the control channel are interleaved and then discretely mapped to the first symbol of the sTTI. Therefore, reference signals used for control channel demodulation are group-specific (group-specific) reference signals, and are discretely mapped to an available bandwidth for the sTTI; and an sCCE within the sTTI that is not used for control channel transmission may be used for data transmission by a terminal device in a same frequency band.

Data signals of three UEs are transmitted within the sTTI. A reference signal of the UE 1 that is used to demodulate a data channel of the UE 1 and a reference signal of the UE 1 that is used to demodulate a control channel of the UE 1 are multiplexed on a time-frequency resource used by the UE 1, and the reference signal of the UE 1 that is used to demodulate the data channel of the UE 1 carries user-dedicated precoding information of the UE 1. A reference signal of the UE 2 that is used to demodulate a data channel of the UE 2 and a reference signal of the UE 2 that is used to demodulate a control channel of the UE 2 are multiplexed on a time-frequency resource used by the UE 2, and the reference signal of the UE 2 that is used to demodulate the data channel of the UE 2 carries user-dedicated precoding information of the UE 2. A reference signal of UE 3 that is used to demodulate a data channel of the UE 3 and a reference signal of the UE 3 that is used to demodulate a control channel of the UE 3 are a same reference signal.

In this embodiment of the present invention, signaling may be used to indicate whether there is a group-specific reference signal within the sTTI. If the signaling indicates that there is no group-specific reference signal within the sTTI, a time-frequency resource position occupied by the group-specific reference signal may be used for data transmission by a terminal device in a same frequency band.

In another example, using a one-timeslot sTTI as an example, there is a DMRS in each of a control channel area and a data channel area, and sharing of a same configuration pattern by a control channel and a data channel is classified into three cases (namely, Case A to Case C) indicated in FIG. 9:

Case A: The DMRSs in the control channel area and the data channel area are both shared DMRSs. To be specific, the DMRS used for control channel demodulation and the DMRS used for data channel demodulation are multiplexed at DMRS resource positions in the control channel area and the data channel area.

Case B: The DMRS in the control channel area is a shared DMRS, and the DMRS in the data channel area is only used for data demodulation. To be specific, the DMRS used for control channel demodulation and the DMRS used for data channel demodulation are multiplexed at a DMRS resource position in the control channel area.

Case C: The DMRS in the control channel area is separated from the DMRS in the data channel area. To be specific, the DMRS used for control channel demodulation is transmitted at a DMRS resource position in the control channel area, and the DMRS used for data channel demodulation is transmitted at a DMRS resource position in the data channel area.

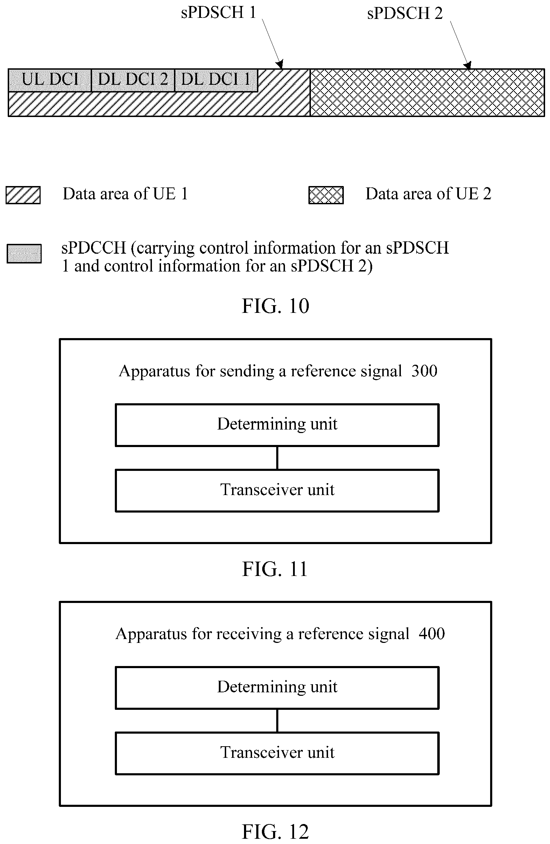

In another example, resource mapping for the control channel uses an RB-level resource mapping manner. FIG. 10 is a schematic diagram of multiplexing of a same reference signal pattern by the control channel and the data channel in this case. From a perspective of UE, there are two cases (namely, Case D and Case E):

Case D: For the UE 2 shown in FIG. 10, the control channel of the UE 2 is located in a data area of the UE 1. In this case, an antenna port for the control channel of the UE and an antenna port for the data channel of the UE may be the same or different. Further, even if the antenna port for the control channel is the same as the antenna port for the data channel, it cannot be assumed that the control channel and the data channel of the UE use same precoding (because they occupy different frequency bands).

Case E: For the UE 1 shown in FIG. 10, the control channel of the UE is located in a data area of the UE. In this case, the data area of the UE may include control channels of a plurality of users. The control channel of the UE may be the last DCI in a frequency band to which the UE belongs. DMRSs in the data area of the UE include two groups of antenna ports, where one group is used for control channel demodulation by a user other than the UE, and the other group is used for data channel demodulation by the UE. Further, the antenna port for the control channel of the UE may be the same as an antenna port for a control channel of another user, for example, when a rank of the data channel of the user is greater than 1 and the control channel uses a single port; or the antenna port for the control channel of the user may be the same as the antenna port for the data channel of the user, for example, when a rank of the data channel of the user is equal to 1. In this case, the control channel and the data channel use a same antenna port, and the control channel also has a beamforming (beamforming) gain, so that channel estimation performance is better.

It should be understood that, the process of indicating a time-frequency resource used to transmit a reference signal in this embodiment of the present invention is described above with reference to a network device and a terminal device. The sending device in this embodiment of the present invention may be a network device. In this case, the sending device can perform an action performed by the network device in the foregoing indication process. Alternatively, the sending device in this embodiment of the present invention may be a terminal device. In this case, the sending device can perform an action performed by the terminal device in the foregoing indication process. Similarly, the receiving device in this embodiment of the present invention may be a network device. In this case, the receiving device can perform an action performed by the network device in the foregoing indication process. Alternatively, the sending device in this embodiment of the present invention may be a terminal device. In this case, the receiving device can perform an action performed by the terminal device in the foregoing indication process.

According to the method for sending a reference signal and the method for receiving a reference signal in the embodiments of the present invention, time-frequency resources of different types of reference signals are determined by using a same configuration pattern, to reduce design difficulty of a configuration pattern, and reduce processing load when a sending device and a receiving device send a reference signal.

FIG. 11 is a schematic block diagram of an apparatus 300 for sending a reference signal according to an embodiment of the present invention. The apparatus 300 may correspond to the first sending device (such as the sending device #A) described in the method 200, and modules or units in the apparatus 300 are respectively configured to perform actions or processing processes performed by the sending device in the method 200. Herein, to avoid repeated descriptions, detailed descriptions thereof are omitted.

In this embodiment of the present invention, the apparatus 300 may include a processor and a transceiver. The processor is connected to the transceiver. Optionally, the device further includes a memory. The memory is connected to the processor. Further optionally, the device includes a bus system. The processor, the memory, and the transceiver may be connected by using the bus system. The memory may be configured to store an instruction. The processor is configured to execute the instruction stored in the memory, to control the transceiver to send information or a signal.

A determining unit in the apparatus 300 shown in FIG. 11 may correspond to the processor, and a transceiver unit in the apparatus 300 shown in FIG. 12 may correspond to the transceiver.

FIG. 12 is a schematic block diagram of an apparatus 400 for receiving a reference signal according to an embodiment of the present invention. The apparatus 400 may correspond to the first receiving device (such as the receiving device #A) described in the method 200, and modules or units in the apparatus 400 are respectively configured to perform actions or processing processes performed by the receiving device in the method 200. Herein, to avoid repeated descriptions, detailed descriptions thereof are omitted.

In this embodiment of the present invention, the apparatus 400 may include a processor and a transceiver. The processor is connected to the transceiver. Optionally, the device further includes a memory. The memory is connected to the processor. Further optionally, the device includes a bus system. The processor, the memory, and the transceiver may be connected by using the bus system. The memory may be configured to store an instruction. The processor is configured to execute the instruction stored in the memory, to control the transceiver to send information or a signal.

A determining unit in the apparatus 400 shown in FIG. 12 may correspond to the processor, and a transceiver unit in the apparatus 400 shown in FIG. 13 may correspond to the transceiver.

It should be noted that the foregoing method embodiment of the present invention may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or a transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps in the methods disclosed with reference to the embodiments of the present invention may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that, the memory in the embodiments of the present invention may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM). It should be noted that, the memory described in this specification intends to include, but is not limited to, these memories and any other memory of an appropriate type.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for sending a reference signal, comprising:

   determining, by a first sending device, an antenna port for a first reference signal, wherein the first reference signal is at least one of at least two types of reference signals, the at least two types of reference signals correspond to a same configuration pattern, and the configuration pattern is used to indicate a time-frequency resource corresponding to each of a plurality of antenna ports; and
   sending, by the first sending device, the first reference signal on the antenna port for the first reference signal, wherein the first reference signal is carried on a first time-frequency resource, and the first time-frequency resource is a time-frequency resource corresponding to the antenna port for the first reference signal and indicated by the configuration pattern.

2. The method according to claim 1, wherein the antenna port for the first reference signal is determined in all antenna ports supported by the sending device.

3. The method according to claim 1 or 2, wherein at least one of the plurality of antenna ports is further used to send a second reference signal, the second reference signal is at least one of the at least two types of reference signals, a type of the first reference signal is different from a type of the second reference signal, the second reference signal is carried on a second time-frequency resource, and the second time-frequency resource is a time-frequency resource corresponding to the antenna port for the second reference signal and indicated by the configuration pattern.

4. The method according to claim 3, wherein the second time-frequency resource comprises a part or all of the first time-frequency resource.

5. The method according to claim 3 or 4, wherein the first reference signal is sent to one receiving device, and the second reference signal is sent to a plurality of receiving devices.

6. The method according to any one of claims 3 to 5, wherein that a type of the first reference signal is different from a type of the second reference signal comprises:

   the first reference signal is used for data channel demodulation, and the second reference signal is used for control channel demodulation; or
   the first reference signal is used for channel measurement, and the second reference signal is used for control channel demodulation; or the first reference signal is used for data channel demodulation, and the second reference signal is used for channel measurement.

7. The method according to any one of claims 3 to 6, wherein at least one of the plurality of antenna ports is further used to send a third reference signal, the third reference signal is at least one of the at least two types of reference signals, a type of the third reference signal is different from the type of the first reference signal, and the type of the third reference signal is different from the type of the second reference signal, the third reference signal is carried on a third time-frequency resource, and the third time-frequency resource is a time-frequency resource corresponding to the antenna port for the third reference signal and indicated by the configuration pattern.

8. The method according to claim 7, wherein the third time-frequency resource comprises a part or all of the first time-frequency resource, and the third time-frequency resource comprises a part or all of the second time-frequency resource.

9. The method according to claim 7 or 8, wherein that a type of the third reference signal is different from the type of the first reference signal, and the type of the third reference signal is different from the type of the second reference signal comprises:
the first reference signal is used for data channel demodulation, the second reference signal is used for control channel demodulation, and the third reference signal is used for channel measurement.

10. The method according to any one of claims 1 to 9, wherein functions of the at least two types of reference signals are different, and the functions comprise at least one of the following:

automatic gain control AGC adjustment, time-frequency synchronization, phase compensation, data channel demodulation, control channel demodulation, channel measurement, radio resource management RRM measurement, or positioning measurement; or
the at least two types of reference signals comprise at least two of a cell-common reference signal CRS, a channel state information-reference signal CSI-RS, or a demodulation reference signal DMRS.

11. A method for receiving a reference signal, comprising:

determining, by a first receiving device, an antenna port for a first reference signal, wherein the first reference signal is at least one of at least two types of reference signals, the at least two types of reference signals correspond to a same configuration pattern, and the configuration pattern is used to indicate a time-frequency resource corresponding to each of a plurality of antenna ports; and
receiving, by the first receiving device, the first reference signal on the antenna port for the first reference signal, wherein the first reference signal is carried on a first time-frequency resource, and the first time-frequency resource is a time-frequency resource corresponding to the antenna port for the first reference signal and indicated by the configuration pattern.

12. The method according to claim 11, wherein the antenna port for the first reference signal is determined in all antenna ports supported by the sending device.

13. The method according to claim 11 or 12, wherein at least one of the plurality of antenna ports is further used to send a second reference signal, the second reference signal is at least one of the at least two types of reference signals, a type of the first reference signal is different from a type of the second reference signal, the second reference signal is carried on a second time-frequency resource, and the second time-frequency resource is a time-frequency resource corresponding to the antenna port for the second reference signal and indicated by the configuration pattern.

14. The method according to claim 13, wherein the second time-frequency resource comprises a part or all of the first time-frequency resource.

15. The method according to claim 13 or 14, wherein the first reference signal is sent to one receiving device, and the second reference signal is sent to a plurality of receiving devices.

16. The method according to any one of claims 13 to 15, wherein that a type of the first reference signal is different from a type of the second reference signal comprises:

the first reference signal is used for data channel demodulation, and the second reference signal is used for control channel demodulation; or
the first reference signal is used for channel measurement, and the second reference signal is used for control channel demodulation; or
the first reference signal is used for data channel demodulation, and the second reference signal is used for channel measurement.

17. The method according to any one of claims 13 to 16, wherein at least one of the plurality of antenna ports is further used to send a third reference signal; the third reference signal is at least one of the at least two types of reference signals; a type of the third reference signal is different from the type of the first reference signal, and the type of the third reference signal is different from the type of the second reference signal; the third reference signal is carried on a third time-frequency resource; and the third time-frequency resource is a time-frequency resource corresponding to the antenna port for the third reference signal and indicated by the configuration pattern.

18. The method according to claim 17, wherein the third time-frequency resource comprises a part or all of the first time-frequency resource, and the third time-frequency resource comprises a part or all of the second time-frequency resource.

19. The method according to claim 17 or 18, wherein that a type of the third reference signal is different from the type of the first reference signal, and the type of the third reference signal is different from the type of the second reference signal comprises:
the first reference signal is used for data channel demodulation, the second reference signal is used for control channel demodulation, and the third reference signal is used for channel measurement.

20. The method according to any one of claims 11 to 19, wherein functions of the at least two types of reference signals are different, and the functions comprise at least one of the following:

automatic gain control AGC adjustment, time-frequency synchronization, phase compensation, data channel demodulation, control channel demodulation, channel measurement, radio resource management RRM measurement, or positioning measurement; or
the at least two types of reference signals comprise at least two of a cell-common reference signal CRS, a channel state information-reference signal CSI-RS, or a demodulation reference signal DMRS.

21. An apparatus for sending a reference signal, comprising:

a determining unit, configured to determine an antenna port for a first reference signal, wherein the first reference signal is at least one of at least two types of reference signals, the at least two types of reference signals correspond to a same configuration pattern; and the configuration pattern is used to indicate a time-frequency resource corresponding to each of a plurality of antenna ports; and
a sending unit, configured to send the first reference signal on the antenna port for the first reference signal, wherein the first reference signal is carried on a first time-frequency resource, and the first time-frequency resource is a time-frequency resource corresponding to the antenna port for the first reference signal and indicated by the configuration pattern.

22. The apparatus according to claim 21, wherein the antenna port for the first reference signal is determined in all antenna ports supported by the sending device.

23. The apparatus according to claim 21 or 22, wherein at least one of the plurality of antenna ports is further used to send a second reference signal, the second reference signal is at least one of the at least two types of reference signals, a type of the first reference signal is different from a type of the second reference signal; the second reference signal is carried on a second time-frequency resource, and the second time-frequency resource is a time-frequency resource corresponding to the antenna port for the second reference signal and indicated by the configuration pattern.

24. The apparatus according to claim 23, wherein the second time-frequency resource comprises a part or all of the first time-frequency resource.

25. The apparatus according to claim 23 or 24, wherein the first reference signal is sent to one receiving device, and the second reference signal is sent to a plurality of receiving devices.

26. The apparatus according to any one of claims 23 to 25, wherein that a type of the first reference signal is different from a type of the second reference signal comprises:

the first reference signal is used for data channel demodulation, and the second reference signal is used for control channel demodulation; or
the first reference signal is used for channel measurement, and the second reference signal is used for control channel demodulation; or
the first reference signal is used for data channel demodulation, and the second reference signal is used for channel measurement.

27. The apparatus according to any one of claims 23 to 26, wherein at least one of the plurality of antenna ports is further used to send a third reference signal, the third reference signal is at least one of the at least two types of reference signals, a type of the third reference signal is different from the type of the first reference signal, and the type of the third reference signal is different from the type of the second reference signal, the third reference signal is carried on a third time-frequency resource; and the third time-frequency resource is a time-frequency resource corresponding to the antenna port for the third reference signal and indicated by the configuration pattern.

28. The apparatus according to claim 27, wherein the third time-frequency resource comprises a part or all of the first time-frequency resource, and the third time-frequency resource comprises a part or all of the second time-frequency resource.

29. The apparatus according to claim 27 or 28, wherein that a type of the third reference signal is different from the type of the first reference signal, and the type of the third reference signal is different from the type of the second reference signal comprises:
the first reference signal is used for data channel demodulation, the second reference signal is used for control channel demodulation, and the third reference signal is used for channel measurement.

30. The apparatus according to any one of claims 21 to 29, wherein functions of the at least two types of reference signals are different, and the functions comprise at least one of the following:

automatic gain control AGC adjustment, time-frequency synchronization, phase compensation, data channel demodulation, control channel demodulation, channel measurement, radio resource management RRM measurement, or positioning measurement; or
the at least two types of reference signals comprise at least two of a cell-common reference signal CRS, a channel state information-reference signal CSI-RS, or a demodulation reference signal DMRS.

31. An apparatus for receiving a reference signal, comprising:

a determining unit, configured to determine an antenna port for a first reference signal, wherein the first reference signal is at least one of at least two types of reference signals, the at least two types of reference signals correspond to a same configuration pattern, and the configuration pattern is used to indicate a time-frequency resource corresponding to each of a plurality of antenna ports; and
a receiving unit, configured to receive the first reference signal on the antenna port for the first reference signal, wherein the first reference signal is carried on a first time-frequency resource, and the first time-frequency resource is a time-frequency resource corresponding to the antenna port for the first reference signal and indicated by the configuration pattern.

32. The apparatus according to claim 31, wherein the antenna port for the first reference signal is determined in all antenna ports supported by the sending device.

33. The apparatus according to claim 31 or 32, wherein at least one of the plurality of antenna ports is further used to send a second reference signal, the second reference signal is at least one of the at least two types of reference signals, a type of the first reference signal is different from a type of the second reference signal, the second reference signal is carried on a second time-frequency resource, and the second time-frequency resource is a time-frequency resource corresponding to the antenna port for the second reference signal and indicated by the configuration pattern.

34. The apparatus according to claim 33, wherein the second time-frequency resource comprises a part or all of the first time-frequency resource.

35. The apparatus according to claim 33 or 34, wherein the first reference signal is sent to one receiving device, and the second reference signal is sent to a plurality of receiving devices.

36. The apparatus according to any one of claims 33 to 35, wherein that a type of the first reference signal is different from a type of the second reference signal comprises:

the first reference signal is used for data channel demodulation, and the second reference signal is used for control channel demodulation; or
the first reference signal is used for channel measurement, and the second reference signal is used for control channel demodulation; or
the first reference signal is used for data channel demodulation, and the second reference signal is used for channel measurement.

37. The apparatus according to any one of claims 33 to 36, wherein at least one of the plurality of antenna ports is further used to send a third reference signal; the third reference signal is at least one of the at least two types of reference signals; a type of the third reference signal is different from the type of the first reference signal, and the type of the third reference signal is different from the type of the second reference signal; the third reference signal is carried on a third time-frequency resource; and the third time-frequency resource is a time-frequency resource corresponding to the antenna port for the third reference signal and indicated by the configuration pattern.

**38.** The apparatus according to claim 37, wherein the third time-frequency resource comprises a part or all of the first time-frequency resource, and the third time-frequency resource comprises a part or all of the second time-frequency resource.

**39.** The apparatus according to claim 37 or 38, wherein that a type of the third reference signal is different from the type of the first reference signal, and the type of the third reference signal is different from the type of the second reference signal comprises:
the first reference signal is used for data channel demodulation, the second reference signal is used for control channel demodulation, and the third reference signal is used for channel measurement.

**40.** The apparatus according to any one of claims 31 to 39, wherein functions of the at least two types of reference signals are different, and the functions comprise at least one of the following:

automatic gain control AGC adjustment, time-frequency synchronization, phase compensation, data channel demodulation, control channel demodulation, channel measurement, radio resource management RRM measurement, or positioning measurement; or
the at least two types of reference signals comprise at least two of a cell-common reference signal CRS, a channel state information-reference signal CSI-RS, or a demodulation reference signal DMRS.

FIG. 1

FIG. 2

Time-frequency resources corresponding to antenna ports a, b, c, and d

Time-frequency resources corresponding to antenna ports e, f, g, and h

$l = 0$    $l = 6$   $l = 0$    $l = 6$

FIG. 3

Time-frequency resources corresponding to antenna ports 0, 1, 2, and 3

Time-frequency resources corresponding to antenna ports 7, 8, 11, and 13

Time-frequency resources corresponding to antenna ports 9, 10, 12, and 14

$l = 0$    $l = 6$   $l = 0$    $l = 6$

FIG. 4

Sending device #A

Receiving device #A

S210: Determine an antenna port #A for a reference signal #A

S220:

Search, based on the antenna port #A, a configuration pattern for a time-frequency resource #A corresponding to the antenna port #A, and send the reference signal #A on the time-frequency resource #A through the antenna port #A

FIG. 5

Case 1: A reference signal carries no precoding

Case 2: A reference signal carries common precoding

Case 3: A reference signal carries dedicated precoding

Range of a receiving device of the reference signal

FIG. 6

Time-frequency resource corresponding to an antenna port group for a reference signal used for measurement

Time-frequency resource corresponding to an antenna port group 1 for a reference signal used for data demodulation by UE 1

Time-frequency resource corresponding to an antenna port group 2 for a reference signal used for data demodulation by UE 2

Data channel of the UE 1

Data channel of the UE 2

PDCCH

Note: ▨ includes meanings of both ▦ and ▨

Note: ▨ includes meanings of both ▦ and ▨

FIG. 7

Time-frequency resource used by UE 1

Time-frequency resource used by UE 2

Time-frequency resource used by UE 3

Time-frequency resource corresponding to an antenna port for a reference signal used for control channel demodulation

Time-frequency resource corresponding to an antenna port for a reference signal used for demodulation by the UE 1

Time-frequency resource corresponding to an antenna port for a reference signal used for demodulation by the UE 2

Symbol on which the control channel is located

FIG. 8

Case C                    Case D                    Case E

☐ sPDCCH  ⬚ sPDSCH

Time-frequency resource corresponding to an antenna port for a reference signal used for sPDCCH demodulation

Time-frequency resource corresponding to an antenna port for a reference signal used for sPDSCH demodulation

FIG. 9

sPDSCH 1           sPDSCH 2

| UL DCI | DL DCI 2 | DL DCI 1 | | |

▨ Data area of UE 1        ▧ Data area of UE 2

▦ sPDCCH (carrying control information for an sPDSCH 1 and control information for an sPDSCH 2)

FIG. 10

Apparatus for sending a reference signal 300

Determining unit

Transceiver unit

FIG. 11

Apparatus for receiving a reference signal 400

Determining unit

Transceiver unit

FIG. 12

# INTERNATIONAL SEARCH REPORT

International application No.

PCT/CN2016/095031

## A. CLASSIFICATION OF SUBJECT MATTER

H04W 28/16 (2009.01) i

According to International Patent Classification (IPC) or to both national classification and IPC

## B. FIELDS SEARCHED

Minimum documentation searched (classification system followed by classification symbols)

H04L; H04W; H0Q

Documentation searched other than minimum documentation to the extent that such documents are included in the fields searched

Electronic data base consulted during the international search (name of data base and, where practicable, search terms used)

CNTXT, CNABS, DWPI, VEN: 参考信号, 时频资源, 配置图案, 端口, 不同, 相同, reference signal, time frequency resource, configure pattern, port, different, same

## C. DOCUMENTS CONSIDERED TO BE RELEVANT

| Category* | Citation of document, with indication, where appropriate, of the relevant passages | Relevant to claim No. |
|---|---|---|
| X | CN 104581835 A (HUAWEI TECHNOLOGIES CO., LTD.), 29 April 2015 (29.04.2015), description, paragraphs [0057]-[0066] and [0084]-[0106], and figures 8 and 10 | 1-40 |
| A | CN 102045728 A (HUAWEI TECHNOLOGIES CO., LTD.), 04 May 2011 (04.05.2011), entire document | 1-40 |
| A | US 2011081933 A1 (PANTECH CO., LTD.), 07 April 2011 (07.04.2011), entire document | 1-40 |

☐ Further documents are listed in the continuation of Box C.　　☒ See patent family annex.

| | |
|---|---|
| *　　Special categories of cited documents: | "T" later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 24 April 2017 | 04 May 2017 |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer LI, Xiao Telephone No.: (86-10) 62089573 |

Form PCT/ISA/210 (second sheet) (July 2009)

## INTERNATIONAL SEARCH REPORT
Information on patent family members

| International application No. |
| --- |
| PCT/CN2016/095031 |

| Patent Documents referred in the Report | Publication Date | Patent Family | Publication Date |
| --- | --- | --- | --- |
| CN 104581835 A | 29 April 2015 | None | |
| CN 102045728 A | 04 May 2011 | CN 102045728 B | 09 July 2014 |
| US 2011081933 A1 | 07 April 2011 | KR 20110037431 A | 13 April 2011 |
| | | WO 2011043595 A2 | 14 April 2011 |
| | | WO 2011043595 A3 | 25 August 2011 |

Form PCT/ISA/210 (patent family annex) (July 2009)